# EUROPEAN PATENT SPECIFICATION

(11) **EP 4 358 232 B1**
(45) Date of publication and mention of the grant of the patent: **21.01.2026**
(21) Application number: 22861646.2
(22) Date of filing: 19.08.2022
(51) Int. Cl.: H01M 10/54, C01G 53/00, C01G 53/50, C22B 7/00, H01M 4/04, H01M 4/131, H01M 4/1391, H01M 4/505, H01M 4/525, H01M 10/0525

(54) **METHOD FOR REUSING POSITIVE ELECTRODE ACTIVE MATERIAL**
VERFAHREN ZUR WIEDERVERWENDUNG VON POSITIVELEKTRODENAKTIVMATERIAL
PROCÉDÉ DE RÉUTILISATION DE MATÉRIAU ACTIF D'ÉLECTRODE POSITIVE

(30) Priority: 26.08.2021 KR 20210113482
(43) Date of publication of application: 24.04.2024
(73) Proprietor: LG Energy Solution, Ltd., Seoul 07335 (KR)
(72) Inventor: KIM, Min-Seo, Daejeon 34122 (KR); YANG, Doo-Kyung, Daejeon 34122 (KR); PARK, Se-Ho, Daejeon 34122 (KR); SEO, Yong-Sik, Daejeon 34122 (KR); SEONG, Eun-Kyu, Daejeon 34122 (KR); LEE, Jeong-Bae, Daejeon 34122 (KR)
(74) Representative: Hoffmann Eitle
(86) International application number: PCT/KR2022/012460
(87) International publication number: WO 2023/027436

(56) References cited:
- CN-A- 105 870 533
- CN-A- 105 870 533
- CN-B- 110 010 990
- CN-B- 110 010 990
- KR-B1- 100 503 385
- KR-B1- 101 992 715
- KR-B1- 102 156 796
- US-A1- 2018 212 282

## Description

### TECHNICAL FIELD

The present disclosure relates to a method for recycling resources when manufacturing lithium secondary batteries. Particularly, the present disclosure relates to a method for recovering and reusing a positive electrode active material from a defected stack cell generated in a process for manufacturing a lithium secondary battery or a lithium secondary battery discarded after use. The present application claims priority to Korean Patent Application No. 10-2021-0113482 filed on August 26, 2021 in the Republic of Korea.

### BACKGROUND ART

Rechargeable lithium secondary batteries have been spotlighted as substitutes for fossil energy. Lithium secondary batteries have been used largely for conventional handheld devices, such as cellular phones, video camera and gearing tools. However, recently, application of lithium secondary batteries tends to be extended gradually to electrically driven vehicles (EV, HEV and PHEV), large-capacity energy storage systems (ESS), uninterruptable power supply (UPS), or the like.

A lithium secondary battery is provided with an electrode assembly including a group of unit cells having a structure in which a positive electrode plate and a negative electrode plate, each including an active material coated on a current collector, are disposed with a separator interposed therebetween, and a casing (i.e. battery casing) configured to receive and seal the electrode assembly together with an electrolyte. The positive electrode active material for a lithium secondary battery mainly uses a lithium-based oxide, while the negative electrode active material uses a carbonaceous material. The lithium-based oxide contains a metal, such as cobalt, nickel or manganese. Particularly, nickel and manganese are expensive valuable metals, and more particularly, cobalt belongs to strategic metals and is given to special attentions about its supply and demand from all the countries of the world. It is known that since the number of cobalt production countries is limited, cobalt is a metal, the supply and demand of which is unstable. When an imbalance in supply and demand of raw materials of strategic metals occurs, it is highly likely that the cost of raw materials is increased.

According to the related art, studies about recovering and recycling such valuable metals from lithium secondary batteries (waste batteries) that are out of service and discarded after use have been conducted largely. According to the related art, most of the methods for recovering a positive electrode active material include dissolving a positive electrode in hydrochloric acid, sulfuric acid, nitric acid, or the like, and extracting the active material elements, such as cobalt, nickel and manganese, to be reused as raw materials for preparing a positive electrode active material. However, such a process of extracting active material elements using an acid is not eco-friendly as a process of recovering pure raw materials, and requires a neutralization step and wastewater treatment step to cause an increase in processing costs undesirably. In addition, there is a disadvantage in that one of the main elements among the positive electrode active material elements, i.e. lithium, cannot be recovered. To solve the disadvantage, there is a need for a method for directly reusing a positive electrode active material, while not dissolving the positive electrode active material and not extracting the active material in the form of elements.

Meanwhile, in the case of a pouch-type battery among the types of lithium secondary batteries, it uses a stack cell formed by stacking a positive electrode plate, a separator and a negative electrode plate and carrying out hot pressing (so called lamination) of the resultant structure to perform integration. When using a separator coated with ceramic particles, such as inorganic compound/inorganic oxide particles, the ceramic particles may be transferred to the positive electrode active material of the positive electrode plate during the hot pressing. In order to recover and recycle a positive electrode active material from a degraded electrode of a defected stack cell generated in a process for manufacturing a lithium secondary battery or a lithium secondary battery discarded after use, it is essentially required to remove the ceramic particles transferred to the positive electrode active material. However, in the methods for recovering a positive electrode active material according to the related art, no definite process for separating a positive electrode from a stack cell or degraded electrode has been suggested. Moreover, there has been no consideration about the treatment of the ceramic particles transferred to the positive electrode active material.

US 2018/0212282 A1 describes a method for recovering a positive electrode active material from a lithium secondary battery including: separating a positive electrode into a collector and a positive electrode part; removing an organic substance by firing the separated positive electrode part; washing the fired resultant and removing remaining fluorine; adding a lithium-containing material into the washed resultant and firing to recover a lithium transition metal oxide.

CN 105870533 A relates to a method for recovering leftover materials of lithium ion battery cathodes.

CN 110010990 A describes a method for preparing a nickel-cobalt-manganese ternary material with aluminum oxide coating layer using dismissed lithium ion batteries as raw material.

### DISCLOSURE

### Technical Problem

The present disclosure is designed to solve the problems of the related art, and therefore the present disclosure is directed to providing a method for recovering and reusing a positive electrode active material from a defected stack cell or a degraded electrode.

### Technical Solution

In one aspect of the present disclosure, there is provided a method for reusing a positive electrode active material, including the steps of: dipping a stack cell including a stacked and integrated positive electrode plate, separator and negative electrode plate, in a polar solvent to separate the positive electrode plate, wherein the separator includes a polymer substrate coated with ceramic particles, and the positive electrode plate comprises a current collector and a positive electrode active material layer comprising a binder and a conductive material; heat treating the separated positive electrode plate in the air or under oxygen atmosphere at 300-650°C to perform thermal decomposition of the binder and conductive material in the positive electrode active material layer of the positive electrode plate and to separate the current collector of the positive electrode plate from the positive electrode active material layer, and recovering the active material in the active material layer; washing the recovered active material with an aqueous lithium compound solution showing alkalinity in an aqueous solution state; and adding a lithium precursor to the washed active material and carrying out annealing to obtain a reusable active material.

According to an embodiment of the present disclosure, acetone is used preferably as the polar solvent.

According to an embodiment of the present disclosure, the method may further include a step of carrying out surface coating of the annealed active material.

According to an embodiment of the present disclosure, the method may further include a step of carrying out surface coating of the annealed active material after washing the annealed active material.

The heat treatment is carried out in the air or under oxygen atmosphere at 300-650°C.

The heat treatment may be carried out at 550°C for 30 minutes at a temperature increasing rate of 5°C/min.

The aqueous lithium compound solution is prepared in such a manner that it may include a lithium compound in an amount of larger than 0% and equal to or less than 15%, and preferably uses LiOH. The washing may be carried out by impregnating the recovered active material with the aqueous lithium compound solution, while carrying out agitation at the same time.

The lithium precursor may be at least one selected from LiOH, Li₂CO₃, LiNO₃ and Li₂O.

The lithium precursor may be added in such an amount that the ratio of lithium loss as compared to the ratio of lithium to the other metals in the original active material used for the active material layer may be supplemented.

For example, the lithium precursor may be added in an amount of lithium corresponding to a molar ratio of 0.001-0.4.

In addition, the lithium precursor may be added preferably in such a manner that lithium may be further added at a molar ratio of 0.0001-0.1 based on a molar ratio of 1 : 1 of lithium : the other metals.

The annealing may be carried out at 400-1000°C under air or oxygen atmosphere.

The temperature of the annealing step may be a temperature higher than the melting point of the lithium precursor.

The active material in the active material layer may be recovered in the form of powder, and any carbonaceous ingredient produced by carbonization of the binder or conductive material may not remain on the surface.

The surface coating step may be carried out by coating the surface of the active material with at least one of metals, organometals and carbonaceous ingredients through a solid phase process or liquid phase process, and then carrying out heat treatment at 100-1200°C.

According to an embodiment of the present disclosure, the positive electrode active material may be a lithium transition metal composite oxide containing nickel, cobalt and manganese or aluminum, and the nickel content may be 60 mol% or higher based on the total number of moles of the transition metals.

The reusable active material may have a fluorine (F) content of 100 ppm or less.

The method may further include a step of mixing the washed active material with a lithium precursor solution and carrying out spray drying, after the step of washing the recovered active material.

### Advantageous Effects

According to the present disclosure, a positive electrode active material can be recycled in an eco-friendly manner, while not using any acid. The method according to the present disclosure requires no neutralization step or waste water treatment step, and thus can reduce an environmental issue and save the processing costs.

According to the present disclosure, it is possible to recover positive electrode active materials without any metal element that cannot be recovered. In addition, a current collector may be recovered, since the current collector is not dissolved. The method according to the present disclosure is not a method for extracting active material elements so that they may be used again as starting materials for preparing positive electrode active materials, but a method which allows direct reusing of the active material recovered in the form of powder, and thus is cost-efficient.

According to the present disclosure, the method uses no solvent at risk of explosion, such as NMP, DMC, acetone or methanol, and thus shows high safety. In addition, the method uses simple processes, such as heat treatment, washing and annealing, and thus allows easy management of the process and is suitable for mass production.

According to the present disclosure, the recovered active material undergoes no degradation of electrochemical performance, and can realize excellent resistance characteristics and capacity characteristics.

Particularly, according to the present disclosure, there is an advantage in that a reusable active material can be obtained from a defected stack cell generated in a process for manufacturing a lithium secondary battery or a degraded electrode, with no incorporation of foreign materials, such as ceramic particles.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a flow chart illustrating the method for reusing an active material according to an embodiment of the present disclosure.
FIG. 2 is a flow chart illustrating the method for reusing an active material according to another embodiment of the present disclosure.
FIG. 3 is a flow chart illustrating the method for reusing an active material according to still another embodiment of the present disclosure.
FIG. 4a is a photographic image of a stack cell, FIG. 4b is a photographic image of a positive electrode plate before forming a stack cell, and FIGS. 4c and 4d are photographic images of a positive electrode plate after forming a stack cell and separating a negative electrode plate and separator merely physically from the positive electrode plate.
FIG. 5 is a photographic image of the active material recovered after heat treating the positive electrode plate of FIG. 4c.
FIG. 6 is a photographic image of the positive electrode plate of FIG. 4c after dipping it in acetone and allowing it to stand therein for a predetermined time.
FIG. 7a is a photographic image of a stack cell dipped in acetone, FIG. 7b is a photographic image illustrating the positive electrode plate lifted from the stack cell after the lapse of a predetermined time, and FIG. 7c is a photographic image of the positive electrode plate separated completely from the stack cell.
FIG. 8 shows the results of evaluation of cells using a NCM-based active material according to Examples and Comparative Examples.
FIG. 9 shows the results of evaluation of cells using a LCO-based active materials according to Example and Comparative Examples.
FIG. 10 shows the results of evaluation of cells using another LCO-based active materials according to Example and Comparative Examples.
FIG. 11 shows the X-ray diffraction (XRD) pattern of the active material according to each of Examples and Comparative Examples.
FIG. 12 shows the scanning electron microscopic (SEM) image of the active material according to each of Examples and Comparative Examples.
FIG. 13 is a particle size distribution graph of the active material according to each of Examples and Comparative Examples.
FIGS. 14 and 15 show the results of evaluation of cells using another NCM-based active material according to Examples and Comparative Examples.
FIGS. 16 and 17 show the results of evaluation of cells using a Ni-rich active material according to Examples and Comparative Examples.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

In the following description, the present disclosure will be explained with reference to the accompanying drawings.

Unless otherwise stated, all of the technical and scientific terms used herein generally have the same meanings as understood commonly by those skilled in the art.

The terminology used herein is for the purpose of describing particular embodiments only and is not intended to be limiting of the present disclosure.

The conventional process for recycling an active material is essentially based on extracting valuable metals (nickel, cobalt, manganese, etc.) in the lithium secondary battery active material, degraded in terms of performance after use, in the form of elements, and resynthesizing an active material. However, the present disclosure is differentiated from the conventional process in that the active material is recovered from a defected stack cell generated in a process for manufacturing a lithium secondary battery or a degraded electrode including a stack cell.

In addition, in the case of the known active material recycling process, chemical methods are added, wherein valuable metals are extracted through the melting using acid/base dissolution or a reductant/oxidant, and the valuable metals are converted into metals (direct reduction process) or resynthesized active materials. However, the present disclosure relates to a method for directly reusing a positive electrode active material, while not dissolving the positive electrode active material.

In order to reuse a positive electrode material directly, it is required to remove a current collector from a positive electrode. The methods for removing a current collector from a positive electrode may include removing the binder through high-temperature heat treatment, dissolving a binder by using a solvent, melting a current collector completely, sorting an active material through dry pulverization and sieving, or the like.

In the method for dissolving the binder by using a solvent, the stability of the solvent is important. Although NMP is the most efficient solvent, it has disadvantages of toxicity and high cost. There is an additional disadvantage in that a solvent recovery step including retreating the waste solvent may be required. The method for melting a current collector completely requires a lower processing cost as compared to the use of a solvent. However, in this case, foreign materials on the recycled active material surface cannot be removed with ease, and hydrogen gas is generated during the removal of the current collector to cause a risk of explosion. In addition, it is difficult to separate a current collector and an active material perfectly, when using dry pulverization and sieving. During the pulverization, the active material undergoes a change in particle size distribution, and the binder is removed hardly. Therefore, there is a disadvantage of degradation of the characteristics of a battery using the active material recycled in this manner.

According to the present disclosure, high-temperature heat treatment is used to separate the active material from the current collector. Since the method includes a simple process merely based on heating, it is beneficial to mass production and commercialization. However, any foreign materials should not remain on the surface of the recycled active material. According to the present disclosure, even a step of removing the foreign material on the recycled active material surface is suggested.

Particularly, when a positive electrode active material is recycled from a stack cell, it is important to prevent incorporation of the foreign material derived from the separator to the positive electrode active material. According to the present disclosure, there is suggested a method for recycling a positive electrode active material by separating a positive electrode plate completely in such a manner that no ceramic particles may be incorporated to the positive electrode active material, even when a separator coated with ceramic particles, such as inorganic compound/inorganic oxide particles, is used and thus the ceramic particles are transferred to the positive electrode active material.

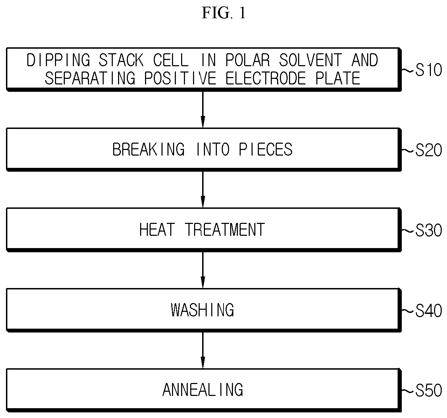

Hereinafter, the method for reusing an active material according to an embodiment of the present disclosure will be explained with reference to FIGS. 1-3.

First, FIG. 1 shows a method suitable when the positive electrode active material is a lithium cobalt oxide, such as LiCoO₂ (LCO).

Referring to FIG. 1, a stack cell including a stacked and integrated positive electrode plate, separator and negative electrode plate is dipped in a polar solvent to separate the positive electrode plate (step S10).

The positive electrode plate may be cut from a positive electrode sheet including a positive electrode active material layer on a positive electrode current collector, such as aluminum foil. The negative electrode plate may be cut from a negative electrode sheet including a negative electrode active material layer on a negative electrode current collector, such as copper foil. The separator includes a polymer substrate coated with ceramic particles, such as inorganic compound/inorganic oxide particles. When the separator is coated with ceramic particles, a coating solution prepared by adding a binder, ceramic particles and a dispersing agent to a highly volatile solvent is used in order to dry the coating layer thinly and rapidly.

The stack cell is obtained by integration through hot pressing (so called lamination). Therefore, when using a separator coated with ceramic particles, such as inorganic compound/inorganic oxide particles, the ceramic particles may be transferred to the positive electrode active material of the positive electrode plate during the hot pressing. Step S10 suggested according to the present disclosure is very suitable for separating the positive electrode plate, while removing the ceramic particles transferred to the positive electrode active material.

The polar solvent in step S10 is preferably the same solvent as the solvent used for manufacturing the separator. When the stack cell is dipped in the solvent, the ceramic particles are detached and left in the solvent. Preferably, the polar solvent is acetone. When the stack cell is dipped in acetone, the constitutional elements of the stack cell, i.e. the positive electrode plate, the negative electrode plate and the separator are separated with ease, and the ceramic particles transferred to the positive electrode active material during the hot pressing of the separator can be separated from the positive electrode plate.

When the positive electrode plate is separated merely physically from the stack cell without dipping it in a polar solvent, like step S10, it is experimentally shown that the ratio of incorporation of the ceramic particles is increased. It is also shown that when the recycled active material is obtained with the ceramic particles incorporated thereto, the ratio of capacity realization is decreased. Therefore, step S10 of the method according to the present disclosure is essentially required to increase the ratio of capacity realization.

Next, the separated positive electrode plate is broken into pieces of a suitable size (step S20). The breaking refers to cutting or shredding the positive electrode plate so that it may be broken into pieces having a suitable size capable of easy handling. Once the positive electrode plate is broken onto pieces, the positive electrode plate may be shredded into a smaller size, such as a size of 1 cm x 1 cm. To carry out the breaking, various dry pulverization devices, such as a hand-mill, a pin-mill, a disc-mill, a cutting-mill and a hammer-mill, may be used, or a high-speed cutter may be used.

The breaking may be carried out considering the handling of the positive electrode plate and the properties required in the devices to be used in the subsequent steps. For example, when using a device requiring continuous processing in loading and unloading the positive electrode plate, the positive electrode plate should have high flowability, and thus an excessively large positive electrode plate should be broken into pieces. When the positive electrode plate has a suitable size, the breaking step S20 may be omitted.

Then, the positive electrode plate is heat treated (step S30).

The active material layer is formed by coating a slurry prepared by mixing an active material, a conductive material, a binder and a solvent, and thus has a structure in which the active material and a conductive material are interconnected with each other by the binder after the evaporation of the solvent. Therefore, when the binder is removed, the active material can be separated from the current collector. The present disclosure is based on this.

The heat treatment according to the present disclosure is carried out in order to thermally decompose the binder in the active material layer. The heat treatment of step S30 is carried out at 300-650°C, and thus may also be referred to as high-temperature heat treatment. At a temperature of lower than 300°C, the binder is removed hardly, and thus the current collector cannot be isolated, undesirably. At a temperature of higher than 650°C, the current collector is molten (melting point of Al: 660°C), and thus the current collector cannot be separated.

The heat treatment is maintained for such a time that the binder may be thermally decomposed sufficiently. For example, the heat treatment time may be about 30 minutes, preferably 30 minutes or more. As the heat treatment time is increased, the time during which the binder is thermally decomposed is increased. However, if it is more than a certain time, there is no difference in the thermal decomposition effect. Preferably, the heat treatment time may be 30 minutes to 5 hours.

The heat treatment system may include various shapes of furnaces. For example, the heat treatment system may be a box-type furnace, or a rotary kiln capable of continuous treatment, considering the productivity.

After the heat treatment, cooling may be carried out gradually or rapidly in the air.

For example, the heat treatment may be carried out at a temperature of 550°C for 30 minutes at a temperature increasing rate of 5°C/min. For example, the temperature increasing rate is such a rate that it may be realized with no problem in a box type furnace, while accomplishing heating without generating thermal impact to the positive electrode plate. The heat treatment temperature, 550°C, is one considering the melting point of the Al current collector and allows smooth thermal decomposition of the binder. At this temperature, when carrying out heat treatment for a time of less than 10 minutes, thermal decomposition occurs insufficiently, and thus heat treatment should be carried out for 10 minutes or more, preferably 30 minutes or more.

While the binder and the conductive material in the active material layer are thermally decomposed through the heat treatment, they are converted into CO₂ and H₂O and then removed. Since the binder is removed, the active material is separated from the current collector, and the active material to be recovered may be sorted in the form of powder. Therefore, it is possible to separate the current collector from the active material and to recover the active material in the active material layer merely by carrying out step S30.

It is important that the heat treatment of step S30 may be carried out in the air or under oxygen atmosphere. When carrying out heat treatment under reductant gas or inert gas atmosphere, the binder and the conductive material are not thermally decomposed but carbonized merely. When carbonization is carried out merely, carbonaceous ingredients may remain on the surface of the active material to cause degradation of the performance of the recycled active material. When carrying out heat treatment in the air, the carbon materials in the binder or the conductive material react with oxygen and are removed in the form of CO and CO₂ gases through combustion, and thus substantially all of the binder and the conductive material are removed with no residue.

Therefore, according to the present disclosure, the active material is recovered in the form of powder, and any carbonaceous ingredient formed by the carbonization of the binder or the conductive material may not remain.

Then, the recovered active material is washed (step S40). In the washing step, it is important to carry out washing with an aqueous lithium compound solution showing alkalinity in an aqueous solution state. Such an aqueous lithium compound solution is prepared in such a manner that it may contain a lithium compound in an amount of larger than 0% and equal to or less than 15%, and preferably uses LiOH. The amount of LiOH is 15% or less, preferably. Use of an excessive amount of LiOH may remain excessive LiOH on the surface of the active material after washing, thereby adversely affecting the subsequent annealing step. To clean the active material surface to the highest degree before the annealing step, addition of an excessive amount of LiOH is not preferred in terms of process, and thus the amount of LiOH is limited to 15% or less.

The washing step may be carried out by dipping the recovered active material in the aqueous lithium compound solution. The recovered active material may be washed within one week, preferably within one day of the dipping. When the recovered active material is washed after the lapse of 1 week or more, lithium may be eluted out excessively to cause degradation of capacity. Therefore, the dipping may be carried out preferably within 1 hour. The washing step includes dipping the recovered active material in an aqueous lithium compound solution showing alkalinity in an aqueous solution state, and carrying out agitation, while the recovered active material is dipped. Agitation is also carried out preferably. When the recovered active material is merely dipped in the aqueous lithium compound solution with no agitation, the washing step may be performed slowly to cause lithium elution. When carrying out agitation in combination, the processing time may be minimized. Therefore, it is preferred to carry out agitation, while the recovered active material is dipped in the aqueous lithium compound solution.

After the washing step, filtering and drying in a convection type oven and in the air may be further carried out.

The reason why the recovered active material is washed with an aqueous lithium compound solution showing alkalinity in an aqueous solution state is to remove LiF and metal fluorides that may be present on the surface of the recovered active material and to carry out surface modification. During the heat treatment in step S30, the binder and the conductive material in the active material layer are vaporized and removed. Herein, CO₂ and H₂O may react with lithium on the active material surface to form Li₂CO₃ and LiOH, or fluorine (F) present in the binder, such as PVDF, may react with the metal elements forming the positive electrode active material to form LiF or metal fluorides. When LiF or metal fluorides remain, the characteristics of a battery may be degraded when the active material is reused. According to the present disclosure, the washing step (such as step S40) is added to remove the reactants that may be formed on the recycled active material surface, thereby preventing any foreign material from remaining on the recycled active material surface.

In step S40, it is important to carry out washing with the aqueous lithium compound solution showing alkalinity in an aqueous solution state. When using an aqueous sulfuric acid or a hydrochloric acid solution, not the aqueous lithium compound solution showing alkalinity in an aqueous solution state, F on the active material surface may be washed, but the transition metals (Co, Mg) present in the active material may be eluted to cause degradation of the performance of the recycled positive electrode active material. According to the present disclosure, the aqueous lithium compound solution showing alkalinity in an aqueous solution state is significantly preferred, since it not only can remove the binder that may remain in a trace amount even after the thermal decomposition of step S30 but also can function to supplement the amount of lithium that may be eluted during the washing, while not causing elution of the transition metals present in the active material.

It is possible to control the content of LiF on the recovered active material surface to less than 500 ppm through step S40, resulting in improvement of capacity. Preferably, the content of F may be controlled to 150 ppm or less, more preferably 100 ppm or less, and even more preferably 30 ppm or less. According to the present disclosure, it is possible to recover the active material having a reduced F content, and thus it is possible to realize excellent resistance and capacity characteristics when the recovered active material is reused.

After that, a lithium precursor is added to the washed active material, and annealing is carried out (step S50). It is possible to obtain a reusable active material through step S50.

While the active material is subjected to the preceding steps, S30 and S40, lithium loss may occur. In step S50, such lithium loss is supplemented.

In addition, in step S50, the crystal structure of the active material is restored through annealing, and thus the characteristics of the recycled active material is restored or improved to the level of a fresh active material that has never been used.

While the active material is subjected to the preceding steps, S30 and S40, a deformed structure may appear on the active material surface.

Further, in the case of a LCO active material, Co₃O₄ may be formed on the surface through the thermal decomposition. When a battery is manufactured with Co₃O₄ remaining on the active material, the battery may show poor characteristics. According to the present disclosure, it is possible to recover the crystal structure and to remove Co₃O₄ through step S50, and thus to recover or improve the initial characteristics to a level similar to a fresh active material.

The lithium precursor in step S50 may be at least one selected from LiOH, Li₂CO₃, LiNO₃ and Li₂O.

The lithium precursor may be added in such an amount that the ratio of lithium loss as compared to the ratio of lithium to the other metals in the original active material (i.e. fresh active material) used for the active material layer may be supplemented. For example, the lithium precursor may be added in an amount of lithium corresponding to a molar ratio of 0.001-0.4, suitably 0.01-0.2, when the ratio of lithium to the other metals in the fresh active material is 1. Addition of an excessive amount of lithium precursor exceeding the amount of lithium lost through washing, or the like, leaves unreacted lithium precursor in the recycled active material, which functions to increase the resistance during the reuse of the active material. Therefore, it is required to introduce a suitable amount of lithium precursor.

The annealing may be carried out at 400-1000°C under air or oxygen atmosphere. The annealing temperature may be 600-900°C. The annealing temperature should be varied within a limited range depending on the particular type of the lithium precursor. The annealing time may be 1 hour or more, preferably about 5 hours. When a long annealing time is used, the crystal structure may be restored sufficiently, but annealing carried out for an undesirably long time does not significantly affect the performance. For example, the annealing time may be 15 hours or less. The annealing system may be the same as used in the heat treatment step S30 or a similar one.

For example, when using Li₂CO₃ as a lithium precursor, the annealing temperature may be suitably 700-900°C, and more suitably 710-780°C. This is because the melting point of Li₂CO₃ is 723°C. Most preferably, the annealing may be carried out at 750°C in this case. When using LiOH as a lithium precursor, the annealing temperature may be suitably 400-600°C, and more suitably 450-480°C. This is because the melting point of LiOH is 462°C.

The annealing temperature is preferably a temperature higher than the melting point of the lithium precursor. However, at a temperature higher than 1000°C, the positive electrode active material may be thermally decomposed to cause degradation of the performance of the active material. Therefore, the annealing temperature should not exceed 1000°C.

Therefore, according to the present disclosure, LiF or metal fluoride is removed in the washing step (step S40), and Co₃O₄ is removed in the annealing step (step S50). The washing step using an aqueous lithium compound solution showing alkalinity in an aqueous solution state is advantageous in that it is safe and cost-efficient, can remove LiF or metal fluoride with no loss of other elements, prevents elution of transition metals, and can supplement lithium loss that may occur during the process. In addition, the annealing step is advantageous in that it is safe and cost-efficient, can remove Co₃O₄ effectively, and recovers the crystal structure (i.e. improves the crystallinity), thereby allowing the recycled active material to restore the characteristics of a battery.

The reusable active material obtained according to the present disclosure may have a particle size distribution similar to that of the active material that has been present in the active material layer in the positive electrode plate, and thus requires no separate treatment. Since no carbonaceous ingredients generated from the binder or the conductive material remain, there is no need for a step for removing such carbonaceous ingredients. Therefore, the active material obtained from the method as shown in FIG. 1 can be reused as it is, with no separate treatment, to manufacture a positive electrode.

The recycled active material obtained according to the present disclosure may be used as it is to 100% with no compositional modification, or may be mixed with a fresh active material and further with a conductive material, a binder and a solvent to prepare and use a slurry.

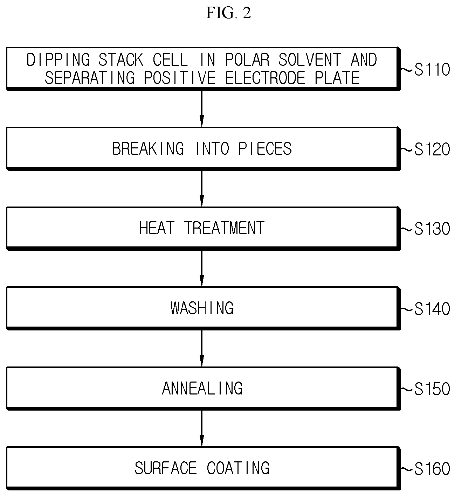

Hereinafter, the method according to another embodiment of the present disclosure will be explained with reference to FIG. 2. FIG. 2 is a method suitable when the positive electrode active material is a lithium transition metal composite oxide including nickel (Ni), cobalt (Co) and manganese (Mn) or aluminum (Al) (abbreviated as 'NCM-based, NCA-based and NCMA-based lithium transition metal composite oxide', hereinafter).

As a positive electrode active material for a lithium secondary battery, a lithium transition metal composite oxide has been used. Particularly, lithium cobalt oxide of LiCoO₂, lithium manganese oxide (e.g. LiMnO₂ or LiMn₂O₄), lithium iron phosphate (e.g. LiFePO₄) or lithium nickel oxide (e.g. LiNiO₂) has been used frequently. In addition, in order to improve low heat stability of LiNiO₂, while maintaining its excellent reversible capacity, there have been used nickel manganese-based lithium transition metal composite oxide in which nickel is partially substituted with manganese having excellent thermal stability, NCM-based lithium transition metal composite oxide in which nickel is partially substituted with manganese and cobalt, NCA-based lithium transition metal composite oxide in which nickel is partially substituted with cobalt and aluminum, and NCMA-based lithium transition metal composite oxide in which nickel is partially substituted with cobalt, manganese and aluminum. The method according to the embodiment as shown in FIG. 2 is particularly suitable for reusing such NCM-based, NCA-based and NCMA-based lithium transition metal composite oxide active materials.

Referring to FIG. 2, a stack cell including a stacked and integrated positive electrode plate, separator and negative electrode plate is dipped in a polar solvent to separate the positive electrode plate (step S110). Step S110 may be carried out in the same manner as S10 of FIG. 1.

Next, the separated positive electrode plate is broken into pieces a suitable size (step S120). The positive electrode plate is heat treated (step S130). Then, the recovered active material is washed (step S140). A lithium precursor is added to the washed active material, and annealing is carried out (step S150). Herein, step S120, step S130, step S140 and step S150 may be carried out in the same manner as step S20, step S30, step S40 and step S50 of FIG. 1, respectively.

Particularly, while the active material is subjected to steps S130 and S140, a deformed structure may appear on the active material surface. For example, when the active material is a NCM-based lithium transition metal composite oxide, Ni may be converted into rock salt [NiCO₃·2Ni(OH)₂)H₂O] due to water in step S140, and thus a spinel structure may be formed. When a battery is manufactured by using the active material as it is, the battery may show degraded characteristics, such as a drop in capacity. According to the present disclosure, the crystal structure is restored through step S150. For example, the active material, NCM-based lithium transition metal composite oxide, is restored into a hexagonal structure. Therefore, the initial characteristics may be restored or improved to a level similar to a fresh active material.

In this embodiment, the method for adding a lithium precursor to the washed active material may be drying the washed active material and adding a lithium precursor thereto in a solid phase or a liquid phase. In a variant, the method may be carried out by adding a lithium precursor to the washed active material and performing spray drying so that drying and addition of a lithium precursor may be carried out in a single step. The lithium precursor solution may use a lithium compound capable of being dissolved in an aqueous solution or an organic solvent.

If the washed active material is dried directly in an oven, or the like, after carrying out surface modification by the washing step, the active material particles may be aggregated to form lumps. Therefore, grinding may be required to incorporate a lithium precursor to the aggregated particles, or a powder mixing or milling process may be required to incorporate a solid-phase lithium precursor. In this case, the process may become complicated, and it is difficult to perform a continuous process. In addition, particularly in the case of a NCM-based positive electrode active material, a powder mixing with a lithium precursor or milling carried out in the presence of water may cause severe aggregation due to the impregnation of the positive electrode active material with water. Therefore, in this embodiment, it is suggested that the active material washed in step S140 is mixed with and dispersed in a lithium precursor solution, and then spray drying is carried out. In this case, it is possible to solve the particle aggregation caused by drying and inconvenience of mixing with a solid-phase lithium precursor. In other words, spray drying has an advantage in that it provides the active material in the form of powder, not lumps.

Upon the spray drying, the lithium precursor ingredient is coated or contacted on the active material surface, while the lithium precursor solution is dried right after the spraying. Herein, while the lithium precursor solution functioning as a solvent is dried, the particles are aggregated by the capillary force, thereby providing an advantage in that the particle size is controlled. In the case of a positive electrode plate converted into an electrode, the particles present on the surface may be pressurized, cracked or broken due to a pressing step. Particularly, the NCM-based active material is more likely to be split due to pressing during the formation of an electrode, as compared to LCO, and thus causes a problem in that the recovered active material includes a larger amount of smaller particles as compared to a fresh active material, resulting in non-uniformity of particles.

Particularly, the NCM-based active material used frequently includes large particles formed as secondary particles by aggregation of primary particles having a particle size of several tens to several hundreds of nanometers. In the positive electrode obtained by using such an active material, the secondary particles may be split during the pressing step for controlling the porosity of the electrode to be converted into primary particles or smaller particles having a size of larger than the primary particles but smaller than the larger particles. As the number of particles split by pressing is increased, the active material has an increased specific surface area. Therefore, in the case of a recycled active material obtained from the pressed electrode, some problems affecting the physical properties of a slurry, an electrode adhesion and an electrode performance may occur, when the active material is reused.

In order to make the recycled active material be in a reusable level, it preferably has a particle size distribution not different from the particle size distribution of a fresh active material. The spray drying suggested according to this embodiment may allow aggregation of smaller particles formed by splitting during the pressing and restoration thereof into larger particles. Therefore, it is possible to solve the problem of non-uniformity of particles and to make the particle size of the recycled active material close to the initial characteristics of a fresh active material. Particularly, this effect is significant in the case of the NCM-based active material undergoing severe splitting in the preceding pressing step. Therefore, it is expected that a battery using the active material recovered according to the method of the present disclosure shows characteristics similar to the characteristics of a battery using a fresh active material.

As described above, the lithium precursor is coated on the active material surface and the active material has a controlled particle size through the spray drying step. Since lithium precursor addition, particle formation and drying are performed in a single step, the overall process is simplified. In addition, there is a special point in that spray drying is not a means for simply acquiring the active material but a means for carrying out larger particle formation of smaller particles used already and split due to the preceding pressing step.

In addition, such washing and spray drying are performed simply by mixing/dispersing the active material particles washed in the preceding step with/in a predetermined concentration of lithium precursor solution, and thus there is an advantage in that the method according to the present disclosure allows a continuous process. Therefore, in the method for reusing an active material according to an embodiment of the present disclosure including a continuous process, lithium precursor coating, drying and particle formation (particle reregulation) are carried out at the same time in a single step.

Meanwhile, in step S150, the lithium precursor may be added preferably in such a manner that lithium may be further added at a molar ratio of 0.0001-0.1 based on a molar ratio of 1 : 1 of lithium : the other metals. The reason why such an excessive amount of lithium is added is for forming a surface protective layer on the active material through surface coating, as described hereinafter. When a secondary battery is manufactured by using the active material, it is possible to maintain life characteristics, while inhibiting side reactions caused by an electrolyte.

Referring to FIG. 2, the annealed active material is subjected to surface coating (step S160).

Depending on the particular type of the originally used active material, a specific element may be lost partially during the process, and particularly, a specific element may be removed completely or a small amount of the element may remain, in the surface modification step (step S140) through washing, so it may not fully recover their properties by only performing the annealing step S150. In this case, the additional surface coating step (step S160) is carried out preferably, as suggested according to the present disclosure. The surface coating may function as a surface protective layer of the positive electrode active material. The surface coating may be a step of reconstructing the surface protective layer present in the fresh active material as well as supplementing a specific element having a deficiency.

The surface coating step may be performed by coating at least one of metals, organometals and carbonaceous ingredients on the surface of the active material through a solid phase or liquid phase process, and carrying out heat treatment at 100-1200°C. When the heat treatment is carried out at a temperature higher than 1200°C, the positive electrode active material may be thermally decomposed to cause degradation of the performance. The surface coating through a solid phase or liquid phase process may use any known method, such as mixing, milling, spray drying or grinding.

A surface protective layer is formed from a heterogeneous metal through the surface coating. When the molar ratio of lithium : the other metals in the positive electrode material is set to 1 : 1, lithium in the active material may react with the surface coating material, and thus the molar ratio of lithium : the other metals in the positive electrode material is reduced to less than 1 : 1. In this case, it is not possible to realize capacity to 100%. Therefore, lithium lost in the preceding step S150 is added in an excessive amount to increase the molar ratio of lithium : the other metals in the positive electrode material to 1 : 1, as well as to allow lithium to be further added at a molar ratio of 0.0001-0.1 based on a molar ratio of 1 : 1 of lithium : the other metals. As a result, it is possible to form a surface protective layer during the surface coating, while providing a molar ratio of 1 : 1 of lithium : the other metals.

Particularly, when an oxide of metal, such as B, W or B-W, is coated on the active material, and then heat treatment is carried out, a lithium boroxide layer functioning as a surface protective layer may be formed on the active material surface. Lithium added additionally at a molar ratio of 0.0001-1 in step S150 reacts with the oxide of metal, such as B, W or B-W, in step S160, and the molar ratio of lithium : the other metals in the positive electrode active material is not reduced to less than 1 : 1. Therefore, the active material causes no degradation of capacity.

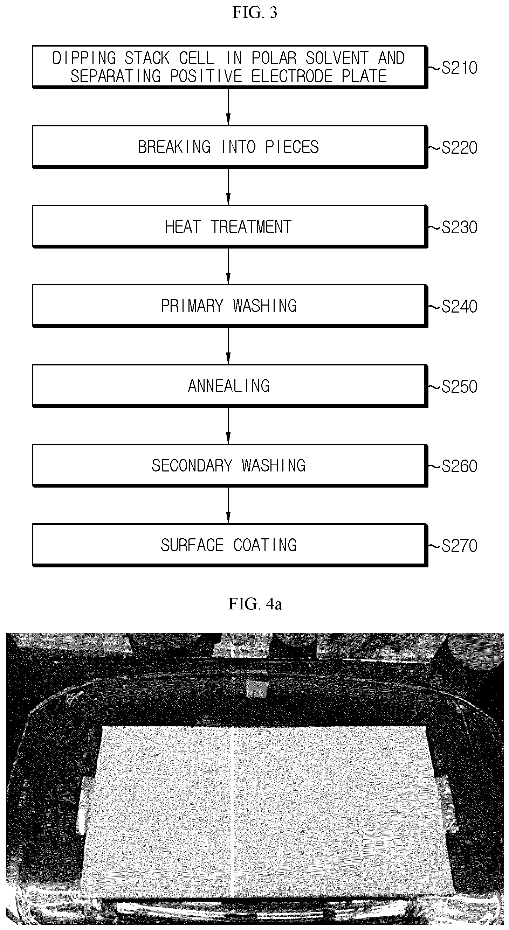

Hereinafter, the method according to still another embodiment of the present disclosure will be explained with reference to FIG. 3. FIG. 3 shows a method suitable when the positive electrode active material is a Ni-rich positive electrode active material, and particularly NCM-based, NCA-based or NCMA-based lithium composite metal oxide containing a high content of Ni. For example, the nickel content may be 60 mol% or more based on the total number of moles of the transition metals. In addition, the nickel content may be 80 mol% or more based on the total number of moles of the transition metals.

Referring to FIG. 3, a stack cell including a stacked and integrated positive electrode plate, separator and negative electrode plate is dipped in a polar solvent to separate the positive electrode plate (step S210). Step S210 may be carried out in the same manner as S10 of FIG. 1.

Next, the separated positive electrode plate is broken into pieces a suitable size (step S220). Step S220 may be carried out in the same manner as S20 of FIG. 1.

Then, the positive electrode plate is heat treated (step S230). Step S230 may also be carried out in the same manner as S30 of FIG. 1. Particularly, when a Ni-rich positive electrode active material is to be recycled, the heat treatment may be carried out preferably under oxygen atmosphere for the purpose of Ni stability. In this case, O₂ having a purity of 80% or more, preferably 90% or more, may be used.

After that, the recovered active material is washed (step S240). A lithium precursor is added to the washed active material, and then annealing is carried out (step S250). Herein, Step S240 and Step S250 may be carried out in the same manner as step S40 and step S50 of FIG.1, respectively. In the annealing of step S250, when a Ni-rich positive electrode active material is to be recycled, the annealing may be carried out preferably under oxygen atmosphere for the purpose of Ni stability. In this case, O₂ having a purity of 80% or more, preferably 90% or more, may be used.

Then, the annealed active material is washed secondarily (step S260). Since the lithium precursor not participating in the reaction after adding the lithium precursor in step S250 is present on the surface of the active material in the form of LiOH or Li₂CO₃, a step of removing residual lithium is required. The secondary washing step may use water (distilled water), preferably. Particularly, lithium impurities, particularly lithium carbonate (Li₂CO₃) impurities remain on the surface more easily, as the Ni content is increased, and such impurities may react with an electrolyte to cause degradation of the performance of a battery and generation of gases. Therefore, strict management is required in this case. This embodiment includes step S240 as a primary washing step and step S260 as a secondary washing step, and step S260 is particularly effective for removing such residual lithium compounds, and thus the method according to this embodiment of the present disclosure is particularly suitable for a method for reusing a Ni-rich positive electrode active material.

Then, the secondarily washed active material is subjected to surface coating (step S270). Step S270 may be carried out in the same manner as step S160 of FIG. 2. It is possible to obtain a reusable active material through step S270.

### MODE FOR DISCLOSURE

Hereinafter, the present disclosure will be explained in more detail with reference to Test Examples.

### <Test Example 1: Stack Cell>

FIG. 4a is a photographic image illustrating a stack cell. Twenty five stacks were formed by stacking positive electrode plates, separators and negative electrode plates. The separator includes a substrate made of a polymer and may be thermally shrinkable. To prevent heat shrinkage, the separator substrate has been coated with several tens to several hundreds of nanometer-scaled ceramic particles. During the lamination, the ceramic particles of the separator are transferred to the positive electrode plate, and the positive electrode is pressed. In this test example, the ceramic particle is Al₂O₃.

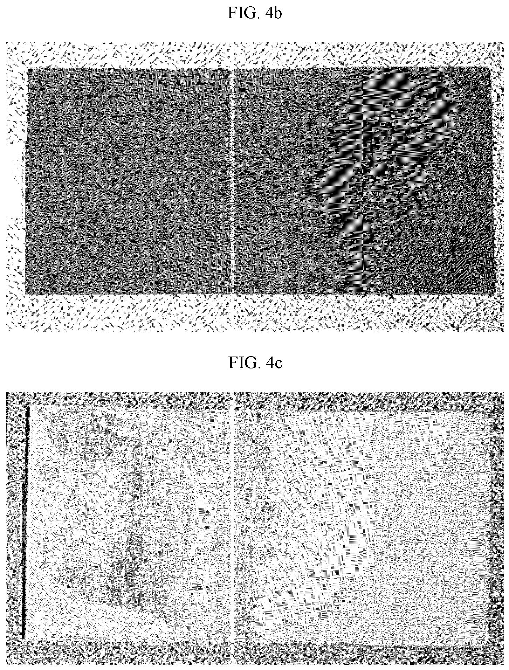

FIG. 4b is a photographic image illustrating a positive electrode plate, before forming a stack cell. The positive electrode plate looks black.

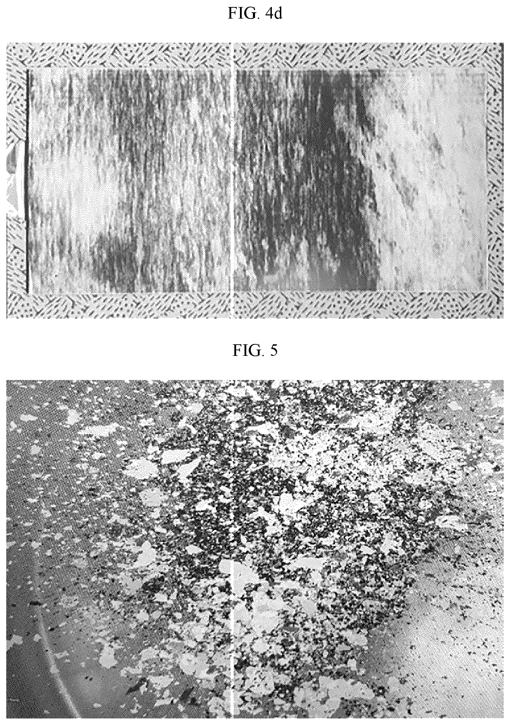

FIG. 4c is a photographic image illustrating the front surface of a positive electrode plate, after forming a stack cell and merely physically separating a negative electrode plate and a separator, and FIG. 4d is a photographic image illustrating the back surface of the positive electrode plate. As compared to FIG. 4b, a lot of white portions appear on the positive electrode plate. The white portions correspond to those to which the ceramic particles are transferred. The ceramic particles are pressurized by the lamination process when integrating the positive electrode plate with the separator. For this, the ceramic particles are transferred to the positive electrode plate. It can be seen that when the positive electrode plate is separated merely physically from the separator, the ceramic particles transferred to the surface of the positive electrode plate still remain on the positive electrode plate. When a recycling process is carried out by using such a positive electrode plate, the ceramic particles remain in the recovered and recycled active material undesirably.

### <Test Example 2: Heat Treatment of Positive Electrode Plate with No Dipping in Polar Solvent>

The positive electrode plate as shown in FIGS. 4c and 4d was heat treated in the same manner as step S30 of FIG. 1. The heat treatment was carried out under the conditions of 550°C/0.5 hr, temperature increasing rate of 5°C/min and an air flow rate of 3L/min. In this manner, the binder and the conductive material were removed from the positive electrode active material layer, and the active material was separated from the current collector.

FIG. 5 is a photographic image illustrating the active material recovered after the heat treatment. The positive electrode active material separated from the positive electrode current collector of the positive electrode plate looks black, and the white portion is a layer of ceramic particles transferred from the separator and remaining on the positive electrode plate. Even when the active material of FIG. 5 was sieved with a 325 mesh sieve, several hundreds of nanometer-scaled ceramic particles were sieved together, and thus could not be separated from the active material. Therefore, as suggested by the present disclosure, it is required to carry out a step of dipping the positive electrode plate in a polar solvent as a step of removing the ceramic particles, before carrying out the heat treatment step.

### <Test Example 3: Effect 1 of Dipping in Polar Solvent>

The positive electrode plate as shown in FIGS. 4c and 4d was subjected to a step corresponding to step S10 of FIG. 1.

When a separator is coated with ceramic particles, a coating solution prepared by adding a binder, ceramic particles and a dispersing agent to a highly volatile solvent is used in order to dry the coating layer thinly and rapidly. When a stack cell is dipped in the same polar solvent as used for manufacturing a separator, the ceramic particles are separated and dropped into the polar solvent. The polar solvent used in this example is acetone.

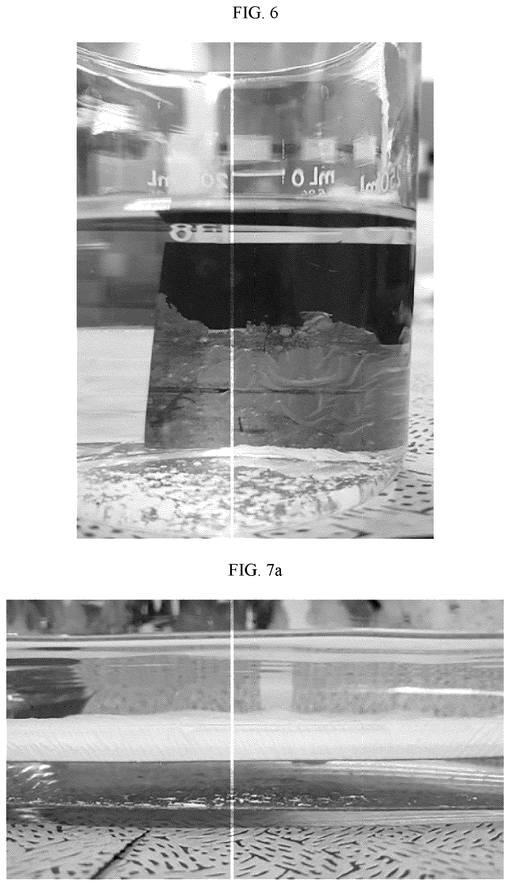

FIG. 6 is a photographic image illustrating the positive electrode plate separated merely physically from the separator after forming a stack cell, dipped in acetone and allowed to stand therein for a predetermined time. It can be seen that since the ceramic particles are separated from the positive electrode plate, a lot of black portions appears on the electrode plate.

### <Test Example 4: Effect 2 of Dipping in Polar Solvent>

The stack cell as shown in FIG. 4a was dipped in acetone and subjected to step S10 of FIG. 1.

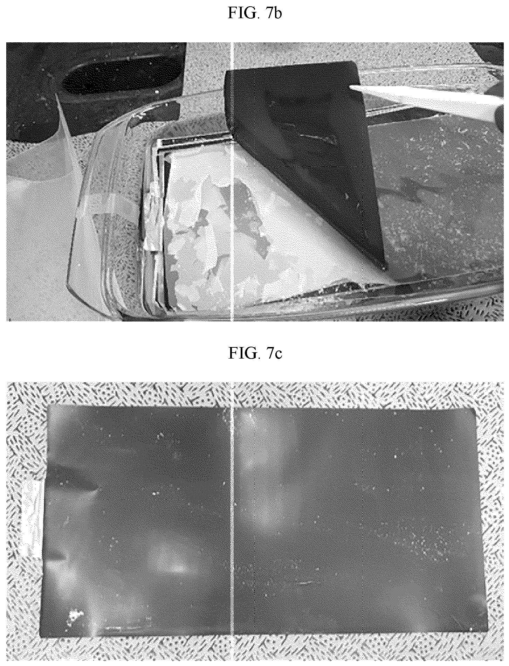

FIG. 7a is a is a photographic image of a stack cell dipped in acetone, FIG. 7b is a photographic image illustrating the positive electrode plate lifted from the stack cell after the lapse of a predetermined time. Unlike FIGS. 4c and 4d, it can be seen that the there is no white portion to which ceramic particles are transferred, and thus the black colored positive electrode plate is clearly separated from the separator.

FIG. 7c is a photographic image of the positive electrode plate separated completely from the stack cell. As compared to FIGS. 4c and 4d, it can be seen that a significantly reduced amount of ceramic particle residue appears on the surface of the finally separated positive electrode plate.

### <Test Example 5: Charge/Discharge Test of Stack Cell Using NCM-Based Positive Electrode Active Material after Separation>

Comparative Example 1: A fresh active material of NCM-based lithium transition metal composite oxide was used.

Example 1: All of the steps of the method according to the present disclosure were carried out to obtain a recycled active material. Particularly, steps S110, S120, S130, S140, S150 and S160 of the method described with reference to FIG. 2 were carried out. First, the stack cell was dipped in acetone to separate the positive electrode plate, and the positive electrode plate was heat treated under the conditions of 550°C/0.5 hr, temperature increasing rate of 5°C/min and an air flow rate of 3L/min to separate the active material. The active material was washed with LiOH for 10 minutes. A lithium precursor (LiOH) was introduced to the active material in such an amount that lithium may be further added at a molar ratio of 0.09 based on the molar ratio of lithium to the other metals in the original active material (analyzed by Inductively Coupled Plasma (ICP)), and then annealing was carried out at 750°C for 15 hours. Then, 1000 ppm H₃BO₃ was added in order to add boron, thereby performing a coating step under the conditions of 300°C/0.5 hr, temperature increasing rate of 2°C/min and an air flow rate of 3L/min.

Example 2: The positive electrode active material was recovered in the same manner as Example 1 so that the positive electrode active material may be reused. However, the amount of lithium precursor added in step S150 was increased to 0.10 mol.

Example 3: The positive electrode active material was recovered in the same manner as Example 1. However, the amount of lithium precursor added in step S150 was increased to 0.11 mol.

Comparative Example 2: The positive electrode plate was separated merely physically from the stack cell, and then treated in the same manner as Example 2, but starting from step S120 of the method described with reference to FIG. 2, while not carrying out step S110.

Each of the positive electrode active materials recovered or prepared according to Examples and Comparative Examples was weighed in an amount corresponding to 96.25 wt%, and carbon black as a conductive material and PVDF as a binder were weighed in an amount of 1.5 wt% and 2.25 wt%, respectively, and then the ingredients were mixed with NMP to form a slurry. Then, a positive electrode was obtained by using each slurry, and a coin half cell (CHC) was manufactured by using the positive electrode and the electrochemical performance thereof was evaluated.

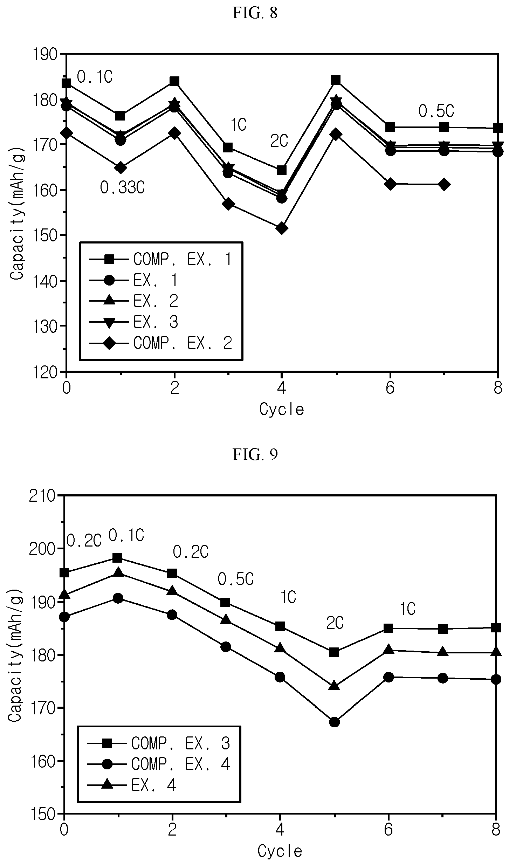

FIG. 8 shows the results of evaluation of cells using the active material according to each of Examples and Comparative Examples. The capacity depending on cycle repetition number was evaluated to determine the rate performance. The instrument used for the evaluation is a charge/discharge tester used generally in laboratories. There is no deviation according to the test instrument or method. In the graph of FIG. 8, the horizontal axis represents a cycle number, and the vertical axis represents a capacity.

The test was carried out under the condition of a voltage of 3-4.3 V, and each half cell was charged/discharged under the condition of 0.1C/0.1C-0.33C/0.33C-0.5C/0.1C-0.5C/1C-0.5C/2C. The electrolyte forming the cell includes carbonate-based compounds containing ethylene carbonate (EC) and ethyl methyl carbonate (EMC) at a ratio of 3 : 7 (EC : EMC), and a predetermined amount of additive (LiPF₆) is added thereto.

The following Table 1 shows the charge capacity, discharge capacity, efficiency and efficiency based on Comparative Example 1 of each of Examples and Comparative Examples.

**[Table 1]**

| | Comp. Ex. 1 | Comp. Ex. 2 | Ex. 1 | Ex. 2 | Ex. 3 |
|---|---|---|---|---|---|
| 0.1C Charge capacity (mAh/g) | 201.71 | 193.40 | 197.86 | 198.08 | 198.96 |
| 0.1C Discharge capacity (mAh/g) | 183.50 | 172.42 | 178.54 | 179.15 | 179.00 |
| Efficiency (%) | 90.97 | 89.15 | 90.23 | 90.44 | 89.96 |
| Efficiency based on Comp. Ex. 1(%) | 100.00 | 93.96 | 97.29 | 97.62 | 97.54 |

Referring to FIG. 8 and Table 1, Comparative Example 2 shows a charge/discharge capacity lower than the charge/discharge capacity of each of Examples 1-3 by 7 mAh/g or more. In other words, the reason why such a result is obtained is that when the positive electrode plate having ceramic particles transferred thereto is separated merely physically from the stack cell, and the separated positive electrode plate still having ceramic particles is subjected to the steps of the method according to the present disclosure, the ratio of incorporation of the ceramic particles is higher as compared to the positive electrode plate that has been subjected to the acetone dipping step. In other words, resistance is increased due to the ceramic particles, resulting in degradation of charge/discharge capacity.

It can be seen from the above result that when the ceramic particles are separated by dipping the positive electrode plate in acetone according to Examples 1-3, it is possible to increase the ratio of capacity realization as compared to Comparative Example 2.

### <Test Example 6: Charge/Discharge Test of Stack Cell Using LCO Positive Electrode Active Material after Separation>

Comparative Example 3: A fresh active material of LCO was used.

Example 4: All of the steps of the method according to the present disclosure were carried out to obtain a recycled active material. Particularly, steps S10, S20, S30, S40 and S50 of the method described with reference to FIG. 1 were carried out. First, the stack cell was dipped in acetone to separate the positive electrode plate, and the positive electrode plate was heat treated under the conditions of 550°C/0.5 hr, temperature increasing rate of 5°C/min and an air flow rate of 3L/min. The obtained active material was washed with LiOH for 10 minutes. Then, a lithium precursor (Li₂CO₃) was introduced in an amount corresponding to 2 mol% excess based on the amount of lithium of the recycled LCO, and annealing was carried out at 750°C for 15 hours.

Comparative Example 4: The positive electrode plate was separated merely physically from the stack cell, and then treated in the same manner as Example 4, but starting from step S20 of the method described with reference to FIG. 1, while not carrying out step S10.

Each of the positive electrode active materials recovered or prepared according to Example and Comparative Examples was weighed in an amount corresponding to 96 wt%, and carbon black as a conductive material and PVDF as a binder were weighed in an amount of 2 wt% and 2 wt%, respectively, and then the ingredients were mixed with NMP to form a slurry. Then, a positive electrode was obtained by using each slurry, and a coin half cell (CHC) was manufactured by using the positive electrode and the electrochemical performance thereof was evaluated.

FIG. 9 shows the results of evaluation of cells using the active material according to each of Example and Comparative Examples. The capacity depending on cycle repetition number was evaluated to determine the rate performance. The instrument used for the evaluation is a charge/discharge tester used generally in laboratories. There is no deviation according to the test instrument or method. In the graph of FIG. 9, the horizontal axis represents a cycle number, and the vertical axis represents a capacity.

The test was carried out under the condition of a voltage of 3-4.55 V, and each half cell was charged/discharged under the condition of 0.2C/0.2C-0.1C/0.1C-0.5C/0.2C-0.5C/1C-0.5C/2C-0.5C/1C. The electrolyte forming the cell includes carbonate-based compounds containing ethylene carbonate (EC), dimethyl carbonate (DMC) and ethyl methyl carbonate (EMC) at a ratio of 3 : 4 : 3 (EC : DMC : EMC), and a predetermined amount of additive (LiPF₆) is added thereto.

The following Table 2 shows the charge capacity, discharge capacity, efficiency and efficiency based on Comparative Example 3 of each of Examples and Comparative Examples.

**[Table 2]**

| | | | Comp. Ex. 3 | Comp. Ex. 4 | Example 5 |
|---|---|---|---|---|---|
| CHC | 0.2C Charge capacity | mAh/g | 208.67 | 201.44 | 206.60 |
| | 0.2C Discharge capacity | | 195.48 | 187.23 | 191.65 |
| | 0.2C Efficiency | % | 93.67 | 92.94 | 92.76 |
| Normalization (based on Comp. Ex. 3) | 0.2C Efficiency | % | 100.00 | 95.77 | 98.04 |

Referring to FIG. 9 and Table 2, Comparative Example 4 shows a lower charge/discharge capacity as compared to Example 5. In other words, the reason why such a result is obtained is that when the positive electrode plate having ceramic particles transferred thereto is separated merely physically from the stack cell, and the separated positive electrode plate still having ceramic particles is subjected to the steps of the method for reusing an active material according to the present disclosure, the ratio of incorporation of the ceramic particles is higher as compared to the positive electrode plate that has been subjected to the acetone dipping step. In other words, resistance is increased due to the ceramic particles, resulting in degradation of charge/discharge capacity.

It can be seen from the above result that when the ceramic particles are separated by dipping the positive electrode plate in acetone according to Example 5, it is possible to increase the ratio of capacity realization as compared to Comparative Example 4.

### <Test Example 7: Determination of Effect of Method for Reusing LCO Positive Electrode Active Material>

Each of the positive electrode active materials was obtained according to Example and Comparative Examples, and evaluated in terms of the residual LiF content, electrochemical performance, or the like.

Comparative Example 5: LCO was used as a fresh material, not a recycled active material. The active material is different from Comparative Example 3.

Example 6: Steps S10, S20, S30, S40 and S50 described in detail with reference to FIG. 1 were carried out. A stack cell was manufactured by using a positive electrode plate including the same positive electrode active material as Comparative Example 5 and was dipped in acetone to separate the positive electrode plate, and then the positive electrode plate was heat treated in the air under the condition of 550°C/0.5 hr. The obtained active material was washed with LiOH for 10 minutes. Then, a lithium precursor (Li₂CO₃) was introduced in an amount corresponding to 2 mol% excess based on the amount of lithium of the recycled LCO, and annealing was carried out at 750°C for 15 hours.

Comparative Example 6: Only the heat treatment of step S30 of the method for reusing an active material according to the present disclosure was carried out to remove the binder and the conductive material and to separate the Al current collector, and the LCO active material was recovered. Step S30 was carried out under the same condition as Example 6. The surface modification of step S40 and the restoration of crystal structure of step S50 of the method for reusing an active material according to the present disclosure were not carried out.

Comparative Example 7: In addition to Comparative Example 6, the surface modification of step S40 of the method for reusing an active material according to the present disclosure was further carried out to recover the LCO active material. In other words, only the surface modification was further carried out, and the restoration of crystal structure of step S50 of the method for reusing an active material according to the present disclosure was not carried out. Step S40 was carried out under the same condition as Example 6.

To determine the residual LiF content in the active material recovered from each of Comparative Examples 6 and 7, F was detected and analyzed by ICP. In Comparative Example 6, the F content was determined to be 1450 mg/kg. In Comparative Example 7, the F content was determined to be 30 ppm or less. It can be seen that Comparative 7 shows a significantly reduced F content in the recovered positive electrode active material as compared to Comparative Example 6. In other words, LiF is dissolved completely in the aqueous lithium compound solution by the washing step to such a degree that no LiF may be detected by ICP. Therefore, it can be seen that step S40 shows an excellent effect of removing LiF.

Each of the positive electrode active materials recovered or prepared according to Example and Comparative Examples was weighed in an amount corresponding to 96 wt%, and carbon black as a conductive material and PVDF as a binder were weighed in an amount of 2 wt% and 2 wt%, respectively, and then the ingredients were mixed with NMP to form a slurry. Then, a positive electrode was obtained by using each slurry, and a cell was manufactured by using the positive electrode and the electrochemical performance thereof was evaluated.

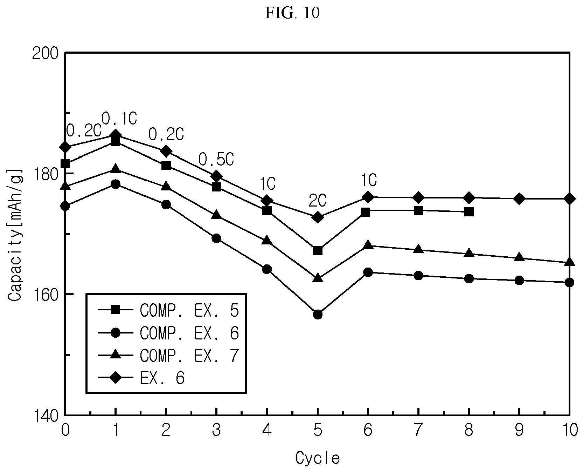

FIG. 10 shows the results of evaluation of cells using the active material according to each of Example and Comparative Examples. The capacity depending on cycle repetition number was evaluated to determine the rate performance. The instrument used for the evaluation is a charge/discharge tester used generally in laboratories. There is no deviation according to the test instrument or method. In the graph of FIG. 10, the horizontal axis represents a cycle number, and the vertical axis represents a capacity.

The test was carried out under the condition of a voltage of 3-4.5 V, and the initial charge/discharge for formation was carried out under the condition of 0.2C/0.2C. The electrolyte forming the cell includes EC and EMC at a ratio of 3 : 7 (EC : EMC), and a predetermined amount of additive is added thereto.

Referring to FIG. 10, the active material recycled according to Comparative Example 6 but not subjected to the surface modification and restoration of crystal structure according to the present disclosure shows the lowest rate performance. This is because the binder and the conductive material are removed in the form of CO₂ and H₂O during the high-temperature heat treatment step (step S30), and CO₂ and H₂O react with lithium on the positive electrode active material surface to form Li₂CO₃ and LiOH, which react with F present in the binder to form LiF or metal fluoride. In addition, it is thought that poor battery characteristics appear due to Co₃O₄ formed through the pyrolysis on the LCO surface.

Comparative Example 7 is subjected to surface modification, as compared to Comparative Example 6. In Comparative Example 7, the reactants formed on the surface are removed by washing. Therefore, it is thought that Comparative Example 7 shows better result as compared to Comparative Example 6.

Example 6 is subjected to annealing, as compared to Comparative Example 7. Particularly, Li₂CO₃ is added in order to supplement lithium lost during the recovery of the active material and to restore the crystallinity, and then annealing is carried out. It is thought that a lithium deficiency that may occur during the process can be supplemented and a deformed structure that may appear on the active material surface during the reusing and Co₃O₄ can be restored into the LCO crystal structure, and thus Example 6 shows improved results as compared to the initial characteristics of the fresh active material according to Comparative Example 5.

As can be seen from the foregoing, it is possible to recover the active material from a positive electrode plate to such a level that the active material may be reused directly. The method according to the present disclosure uses no solvent at risk of explosion, such as NMP, DMC, acetone or methanol, and thus shows high safety. In addition, the method uses simple processes, such as heat treatment, washing and annealing, and thus allows easy management of the process and is suitable for mass production.

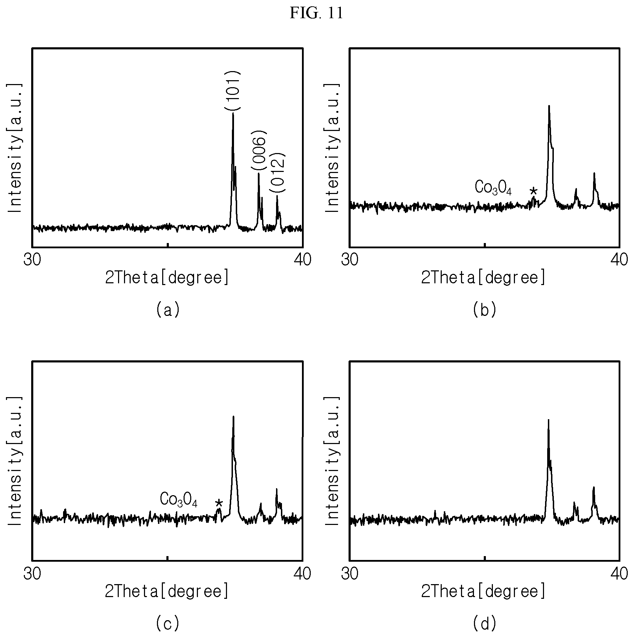

FIG. 11 shows the X-ray diffraction (XRD) pattern of the active material according to each of Examples and Comparative Examples. In the XRD pattern, the horizontal axis represents 2θ (theta) (degree, °), and the vertical axis represents intensity. The XRD pattern may be obtained by using a general X-ray diffractometer used frequently in laboratories. For example, XRD analysis may be carried out by using an X-ray diffractometer available from Rigaku Co., XG-2100. However, there is no deviation according to the test instrument or method.

Portion (a) of FIG. 11 shows an XRD patterns of Comparative Example 5, i.e. fresh LCO. Portion (b) shows an XRD pattern of the active material according to Comparative Example 6, and portion (c) shows an XRD pattern of the active material according to Comparative Example 7. When comparing each of (b) and (c) with (a), Co₃O₄ phase is identified. In other words, it can be seen that Co₃O₄ is formed on the surface of LCO during the heat treatment of step S30.

Portion (d) of FIG. 11 shows an XRD pattern of the active material according to Example 6. When comparting (c) with (d), it can be seen that Co₃O₄ phase disappears and the crystal structure is restored into LCO through the annealing of step S50. Referring to the positions of the diffraction peaks in the XRD patterns, the crystal structure of (d) is similar to that of (a). Therefore, it can be seen that Example 6 according to the present disclosure is restored to the level of the fresh active material according to Comparative Example 5. Therefore, it is possible to recover a positive electrode active material from a stack cell to such a level that the recovered active material may be reused directly.

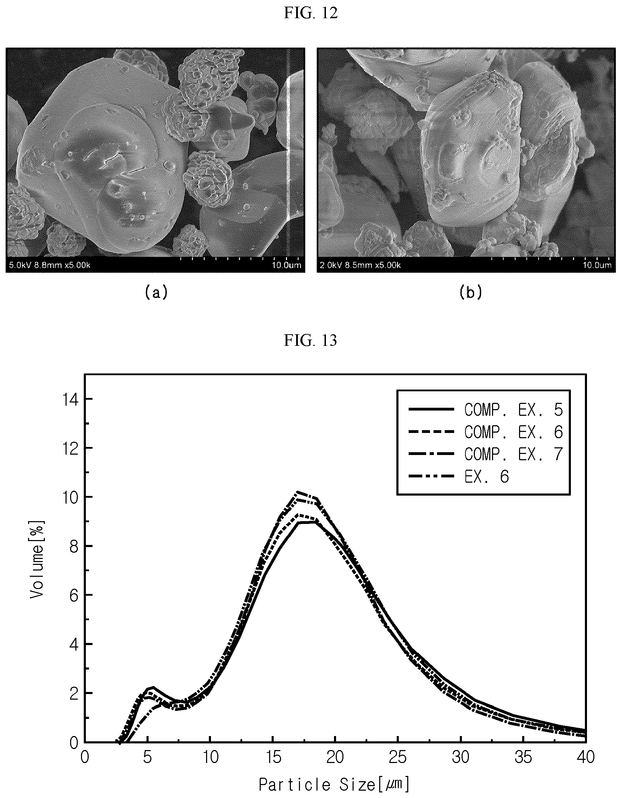

FIG. 12 shows the scanning electron microscopic (SEM) image of the active material according to each of Examples and Comparative Examples. The SEM images were taken by using a general SEM instrument used frequently in laboratories. For example, s-4200 available from HITACH Co. may be used. However, there is no deviation according to the test instrument or method.

Portion (a) of FIG. 12 is a SEM image of fresh LCO according to Comparative Example 5, and portion (b) is a SEM image of the recycled active material according to Example 6. As compared to fresh LCO, the recovered LCO according to Example shows the same configuration. In addition, only LCO is observed, suggesting that the binder and the conductive material are removed during the high-temperature heat treatment. Therefore, it can be seen that when carrying out merely heat treatment in the air, the active material is separated from the current collector, and the binder and the conductive material remain little on the surface of the active material. Therefore, according to the present disclosure, it is possible to separate the active material from the current collector, while not using any complicated method or harmful substance, and thus it is possible to recover the active material in an eco-friendly manner. The active material can be recycled without using any acid to avoid a need for a neutralization step or a waste water treatment step, thereby reducing an environmental issue and saving processing costs.

FIG. 13 is a particle size distribution graph of the active material according to each of Examples and Comparative Examples. The particle size distribution may be obtained by using a general particle size analyzer used frequently in laboratories. For example, LA 950V2 particle size analyzer available from Horiba Co. may be used. However, there is no deviation according to the test instrument or method. In FIG. 13, the horizontal axis represents a particle size (µm), and the vertical axis represents a volume %.

All of the recovered active materials according to Example 6 and Comparative Examples 6 and 7 show a particle size distribution similar to the particle size distribution of fresh LCO according to Comparative Example 5. The expression 'similar particle size distribution' means that the volume% of particles having the same particle size shows a difference within a range of ±2%. Therefore, it is thought that the active material according to the present disclosure causes no significant difference in particle size distribution and maintains substantially the same initial characteristics, and thus a battery to which the recycled active material is applied shows characteristics similar to the characteristics of a battery using the fresh active material.

Besides the LCO positive electrode active material, the method according to the present disclosure is applied to a NCM-based positive electrode active material to obtain a recycled active material. After the recycled active material is tested, it can be seen that a recycled active material is obtained to a similar level of the fresh active material by the method according to the present disclosure. This will be explained in the following Test Example 8.

### <Test Example 8: Determination of Effect of Method for Reusing NCM-Based Positive Electrode Active Material>

Example 7: Steps S110, S120, S130, S140 and S150 described in detail with reference to FIG. 2 were carried out. First, a stack cell was dipped in acetone to separate the positive electrode plate, and then the positive electrode plate was heat treated in the air under the condition of 550°C/0.5 hr, temperature increasing rate of 5°C/min and an air flow of 3L/min. The obtained active material was washed with LiOH for 10 minutes. Then, a lithium precursor (Li₂CO₃) was introduced in an amount corresponding to 0.09 mol% excess based on the molar ratio of lithium to the other metals (ICP analysis), and annealing was carried out at 750°C for 15 hours. Theoretically, the fresh active material shows a molar ratio of lithium to the other metals of 1 : 1, but the ICP instrument used for determination of the molar ratio has an average error of about ±0.05, preferably about ±0.02. For this, the original active material may show a molar ratio of lithium to the other metals of 1±0.05 : 1, as determined by ICP. In this Test Example, ICP analysis was carried out and the lithium precursor was added based on the molar ratio analyzed thereby.

Example 8: In addition to Example 7, the step of restoring an active material surface protective layer according to step S160 of FIG. 2 was also carried out. Then, 1000 ppm H₃BO₃ was added in order to add boron, thereby performing a coating step under the conditions of 300°C/0.5 hr, temperature increasing rate of 2°C/min and an air flow rate of 3L/min.

Comparative Example 8: A fresh NCM-based lithium transition metal composite oxide was used instead of a recycled active material.

Comparative Example 9: Only the heat treatment of step S130 of the method for reusing an active material according to the present disclosure was carried out to remove the binder and the conductive material and to separate the Al current collector, and the NCM-based lithium transition metal composite oxide was recovered. Step S130 was carried out under the same condition as Example 7. The washing step of S140, annealing step of S150 and the surface coating step of S160 of the method for reusing an active material according to the present disclosure were not carried out.

Comparative Example 10: In addition to Comparative Example 9, the method for reusing an active material according to the present disclosure was carried out up to the washing step of S140 to recover the active material. In other words, the active material was subjected to surface modification, but the step of restoring a crystal structure of S150 and the surface coating step of S160 of the method for recovering an active material according to the present disclosure were not carried out. Step S140 was carried out under the same condition as Example 7.

Comparative Example 11: In addition to Comparative Example 9, the method for reusing an active material according to the present disclosure was carried out up to the step of restoring a crystal structure of S150, while not carrying out the surface modification of step S140 of the method for recovering an active material according to the present disclosure, thereby recovering a NCM-based lithium transition metal composite oxide. In the annealing step for restoring a crystal structure, no lithium precursor was added, unlike Example 7.

Comparative Example 12: In the same manner as Example 7, steps S130, S140 and S150 were merely carried out. However, in the annealing step for restoring a crystal structure, no lithium precursor was added, unlike Example 7.

The positive electrode active material recovered or prepared according to each of Example and Comparative Examples was analyzed by ICP to determine the ratio of lithium to the other metals in the active material and the content of a specific element, such as B or W.

In addition, each of the positive electrode active materials recovered or prepared according to Examples and Comparative Examples was weighed in an amount corresponding to 96.25 wt%, and carbon black as a conductive material and PVDF as a binder were weighed in an amount of 1.5 wt% and 2.25 wt%, respectively, and then the ingredients were mixed with NMP to form a slurry. Then, a positive electrode was obtained by using each slurry, and a coin half cell (CHC) was manufactured by using the positive electrode and the electrochemical performance thereof was evaluated.

ICP was carried out to analyze the ratio of lithium to the other metals in the active material in order to determine whether any change occurs or not in the lithium content of the positive electrode active material, while it is processed through steps S130 and S140 of the method according to the present disclosure. The results are shown in the following Table 3.

**[Table 3]**

| | Comp. Ex. 8 | Comp. Ex. 9 | Comp. Ex. 10 |
|---|---|---|---|
| Ratio of lithium to the other metals in active material | 0.99 | 0.95 | 0.91 |

Referring to Table 3, it can be seen that Comparative Example 9 shows a decrease in the ratio of lithium/other metals by about 0.2-0.5 after the heat treatment of step S130 as compared to Comparative Example 8, and Comparative Example 10 shows a decrease in the ratio of lithium/other metals by about 0.2-0.5 after the washing and drying of step S140 as compared to Comparative Example 9. It seems that NCM-based lithium transition metal composite oxide has a relatively large specific surface area of particles and undergoes a change into a spinel structure, and thus shows a large decrease in the ratio of lithium to the other metals. Therefore, it can be seen that the lithium deficiency should be supplemented.

Table 3 shows the measurements determined by ICP analysis. As mentioned earlier, ICP analysis has an error of about ±0.02. Thus, in the case of Comparative Example 8 using a fresh active material, the ratio of lithium to the other metals may be smaller than 1. Therefore, the amount of a lithium precursor added to supplement the lithium loss should correspond to a decrease in lithium content based on the ratio of lithium to the other metals (molar ratio analyzed by ICP) in the original active material (i.e. fresh active material) used in the active material layer.

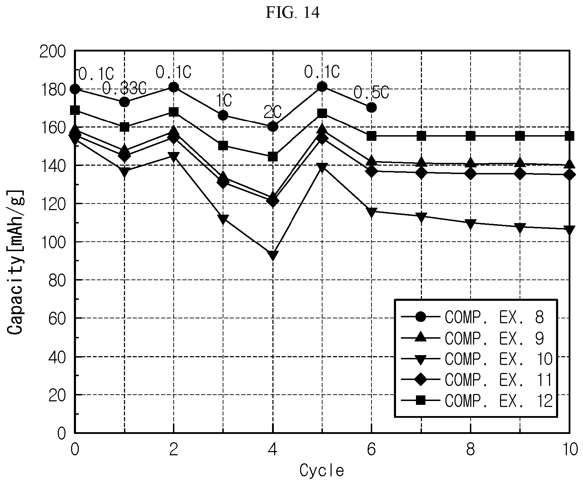

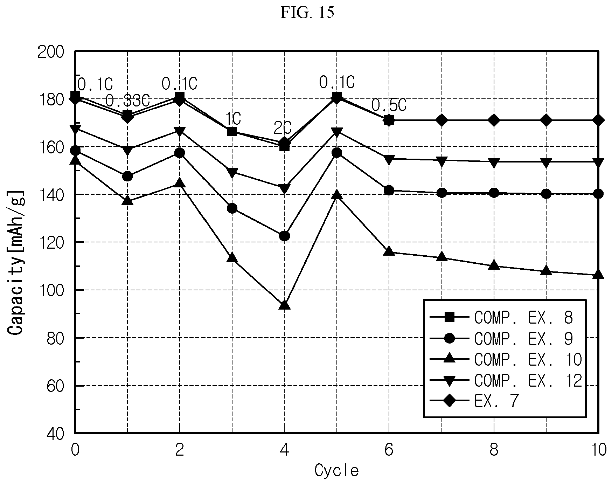

FIGS. 14 and 15 show the results of evaluation of cells using another NCM-based active material according to Examples and Comparative Examples. At different electric current values, the capacity was evaluated depending on the cycle repetition number to determine the rate performance. The instrument used for the evaluation is a general charger used frequently in laboratories. There is no deviation according to the test instrument or method. In the graphs of FIGS. 14 and 15, the horizontal axis represents a cycle number, and the vertical axis represents capacity.

The test was carried out under the condition of a voltage of 3-4.5 V, and the initial charge/discharge for formation was carried out under the condition of 0.1C/0.1C. The electrolyte forming the cell includes EC and EMC at a ratio of 3 : 7 (EC : EMC), and a predetermined amount of additive is added thereto.

Referring to FIG. 14, when comparing Comparative Example 9 subjected to the primary heat treatment for separation (550°C/30 min.) and not subjected to surface modification with Comparative Example 10 subjected to surface modification, Comparative Example 10 subjected to surface modification shows a rapid drop in electrode capacity. This is because Ni in the NCM-based lithium transition metal composite oxide is converted into rock salt due to water as mentioned above, resulting in a drop in capacity.

However, when carrying out annealing (750°C/15 hr) with no surface modification (in the case of Comparative Example 11), there is little effect of improving capacity as compared to Comparative Example 9. This is because LiF remains on the active material surface when surface modification is not performed. In the above Test Example 7, it is demonstrated that the washing step should be carried out in order to remove LiF to a satisfiable level.

When carrying out heat treatment and surface modification after the primary heat treatment, capacity is increased as shown in Comparative Example 12. This is because although Comparative Example 10 subjected to surface modification merely shows a drop in capacity, Ni rock salt is reduced and the structure thereof is restored into a hexagonal system when LiF is removed from the active material through the surface modification and the active material is annealed.

Referring to FIG. 15, Example 7 shows improved capacity as compared to Comparative Example 12. As compared to Comparative Example 12, a lithium precursor is added in the case of Example 7. When the lithium precursor is added, it can supplement the lithium loss generated in the preceding steps, thereby providing improved capacity. The lithium loss during the heat treatment and washing steps is described earlier with reference to Table 3.

The lithium compound is added in an amount corresponding to the ratio of lithium loss based on the lithium content in the original positive electrode active material with reference to the ICP analysis results (Table 3). As a result, when the lithium compound is added at a molar ratio of 0.09-0.1, it is shown by an additional test that capacity is improved to the same level of effect of improving capacity as Comparative Example 8.

As can be seen from the foregoing, it is possible to recover the active material from a positive electrode plate to such a level that the active material may be reused directly. The method according to the present disclosure uses no solvent at risk of explosion, such as NMP, DMC, acetone or methanol, and thus shows high safety. In addition, the method uses simple processes, such as heat treatment, washing and annealing, and thus allows easy management of the process and is suitable for mass production.

Each of the positive electrode active materials recovered or prepared according to Example and Comparative Examples was analyzed in terms of the content of a specific element through ICP analysis.

**[Table 4]**

| | B content (mg/kg) | W content (mg/kg) |
|---|---|---|
| Comp. Ex. 8 | 500 | 3100 |
| Comp. Ex. 9 | 200 | 2700 |
| Comp. Ex. 10 | ND | 200 |
| Comp. Ex. 12 | ND | 200 |
| Example 7 | ND | 200 |

The fresh active material used in this test further includes B and W as shown in Comparative Example 8. Referring to Comparative Example 9, the content of B and W is reduced after the heat treatment. It can be also seen that B is substantially completely removed through the subsequent steps as determined from the remaining results. ND refers to a content of 30 ppm or less. In the case of W, a large amount of W is removed during the surface modification step through the washing as shown in Comparative Example 10.

Therefore, a specific element may be lost partially during the process, depending on the type of the originally used active material. Particularly, such an element may be removed completely or a small amount thereof may remain during the surface modification step through the washing. Therefore, when carrying out up to the annealing step according to Example 7, it is sometimes difficult to restore the properties completely. In this case, it is preferred to carry out an additional surface coating step (S160) as suggested by the present disclosure. In this test, the surface coating step includes coating with B and W. The surface coating may function as a surface protective layer of the positive electrode active material. The surface coating may be a step which not only supplements a specific element having a deficiency but also reconstructs the surface protective layer present on the fresh active material layer. In the case of the fresh active material used in this test, the surface protective layer includes B-W, and thus it is to be understood that the lithium loss during the process is not the ratio of lithium to the other metals of 1 : 1 but the ratio of (lithium in active material itself + lithium forming surface protective layer) : the other metals. Therefore, in this test, a molar ratio of 0.09 of lithium loss in Comparative Example 10 may be understood as the content of lithium in the positive electrode active material plus lithium for forming the surface protective layer. Thus, in Example, the lithium precursor is added in such an amount that the corresponding lithium loss may be supplemented.

### <Test Example 9: Determination of Effect of Method for Reusing Ni-Rich NCM-Based Positive Electrode Active Material>

Comparative Example 13: A fresh active material of Ni-rich NCM-based lithium transition metal composite oxide was used.

Example 9: All of the steps of the method according to the present disclosure were carried out to obtain a recycled active material. Particularly, steps S210, S220, S230, S240, S250, S260 and S270 described in detail with reference to FIG. 3 were carried out. First, a stack cell was dipped in acetone to separate the positive electrode plate, and then the positive electrode plate was heat treated under the condition of 550°C/0.5 hr, temperature increasing rate of 5°C/min and an O₂ flow of 3L/min. The obtained active material was washed twice in step S240. First, the active material was agitated with a washing solution at a rate of the active material : washing solution of 1 : 30 under the condition of 300 rpm/10 min, and only the active material was extracted by using a filter under reduced pressure. Further, washing was carried out at a ratio of the active material : washing solution of 1 : 10. Then, a lithium precursor (Li₂CO₃) was introduced in an amount of 0.11 mol, and the annealing of step S250 of the method for reusing a positive electrode active material according to the present disclosure was carried out under the condition of 750°C/5 hr and an O₂ flow of 3L/min. After that, the water-washing step, S260, was carried out to remove lithium remaining on the surface. The water-washing step was carried out by agitating the active material with a washing solution at a rate of the active material : washing solution of 1 : 1 under 300 rpm for 1 minute and carrying out filtering under reduced pressure, followed by vacuum drying (130°C) overnight. Then, 1000 ppm H₃BO₃ was added in order to add boron, thereby performing a coating step under the conditions of 300°C/0.5 hr, temperature increasing rate of 2°C/min and an air flow rate of 3L/min.

Example 10: A positive electrode active material was recovered in the same manner as Example 9. However, the amount of lithium precursor added in step S250 was increased to 0.13 mol.

Example 11: A positive electrode active material was recovered in the same manner as Example 9. However, the amount of lithium precursor added in step S250 was increased to 0.15 mol.

Example 12: A positive electrode active material was recovered in the same manner as Example 9. However, the amount of lithium precursor added in step S250 was increased to 0.17 mol.

Comparative Example 14: Example 9 was repeated, except that the second washing step, i.e. step S260, was not carried out.

Comparative Example 15: Example 10 was repeated, except that the second washing step, i.e. step S260, was not carried out.

Comparative Example 16: Example 11 was repeated, except that the second washing step, i.e. step S260, was not carried out.

Each of the positive electrode active materials was weighed in an amount corresponding to 96.25 wt%, and carbon black as a conductive material and PVDF as a binder were weighed in an amount of 1.5 wt% and 2.25 wt%, respectively, and then the ingredients were mixed with NMP to form a slurry. Then, a positive electrode was obtained by using each slurry, and a coin half cell (CHC) was manufactured by using the positive electrode and the electrochemical performance thereof was evaluated.

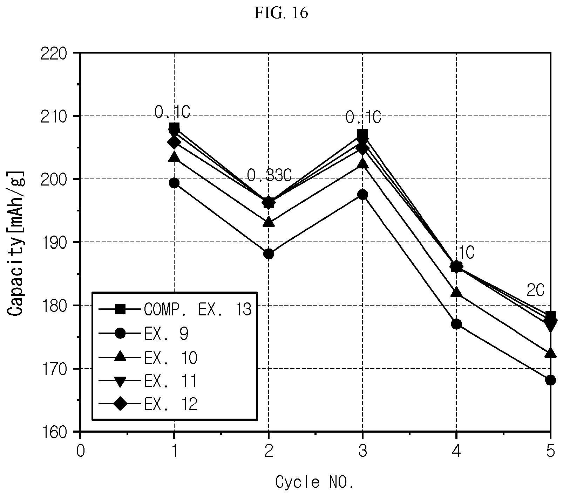

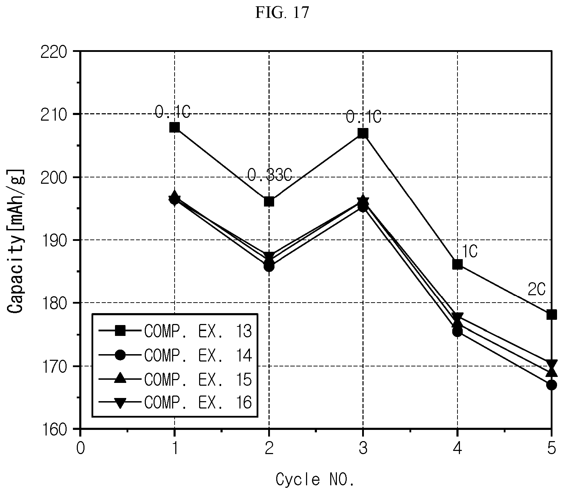

FIGS. 16 and 17 show the results of evaluation of cells using a Ni-rich active material according to Examples and Comparative Examples. At different electric current values, the capacity was evaluated depending on the cycle repetition number to determine the rate performance. The instrument used for the evaluation is a general charger used frequently in laboratories. There is no deviation according to the test instrument or method. In the graphs of FIGS. 16 and 17, the horizontal axis represents a cycle number, and the vertical axis represents capacity.

The test was carried out under the condition of a voltage of 3-4.3 V, and each half cell was charged/discharged under the condition of 0.1C/0.1C-0.33C/0.33C-0.5C/0.1C-0.5C/1C-0.5C/2C. The electrolyte forming the cell includes carbonate-based compounds containing ethylene carbonate (EC) and ethyl methyl carbonate (EMC) at a ratio of 3 : 7 (EC : EMC), and a predetermined amount of additive is added thereto.

Referring to FIG. 16, the fresh active material according to Comparative Example 13 is compared with Examples 9-12. In addition, the following Table 5 shows the results of charge capacity, discharge capacity and efficiency of each of Examples and Comparative Example

**[Table 5]**

| Sample | Charge capacity | Discharge capacity | Efficiency |
|---|---|---|---|
| | (mAh/g) | (mAh/g) | (%) |
| Comp. Ex. 13 | 228.58 | 207.82 | 90.91 |
| Example 9 | 225.01 | 199.44 | 88.63 |
| Example 10 | 226.45 | 203.35 | 89.79 |
| Example 11 | 228.41 | 207.22 | 90.7 |
| Example 12 | 227.59 | 205.87 | 90.45 |

Referring to FIG. 16 and Table 5, when the lithium precursor is added, annealing is carried out, and then the lithium precursor remaining on the surface is removed through the secondary washing step according to an embodiment of the present disclosure, the recycled active material shows the same level of charge/discharge capacity as the fresh active material. When the lithium precursor is added in an amount larger than the lithium loss during the process (0.11 mol), the ratio of capacity realization is increased (from Example 10 to Example 12), as compared to Example 9. In addition to the initial capacity, C-rate capacity is in a similar level to the fresh active material.

Next, FIG. 17 shows the results of comparison of Sample 1 with Comparative Examples 14-16. In Comparative Examples 14-16, the secondary washing step was not carried out after the annealing. The following Table 6 shows the charge capacity, discharge capacity and efficiency.

**[Table 6]**

| Sample | Charge capacity | Discharge capacity | Efficiency |
|---|---|---|---|
| | (mAh/g) | (mAh/g) | (%) |
| Comp. Ex. 13 | 228.58 | 207.82 | 90.91 |
| Comp. Ex. 14 | 224.7 | 196.18 | 87.3 |
| Comp. Ex. 15 | 224.86 | 196.85 | 87.54 |
| Comp. Ex. 16 | 223.39 | 196.33 | 87.88 |

Referring to FIG. 17 and Table 6, it can be seen that when the lithium precursor remaining on the surface is not removed even though annealing is carried out after adding the lithium precursor, the recovered active material shows a lower ratio of capacity realization as compared to the fresh active material. When the lithium precursor is added in an amount larger than the lithium loss during the process (0.11 mol), the initial capacity is not changed, but the capacity is slightly increased at a high C-rate.

The amount of residual lithium was analyzed before and after washing the lithium precursor remaining on the surface with water. Each of the active materials according to Comparative Example 13, Examples 11 and 12 and Comparative Example 16 was weighed in an amount of 5 g, dispersed in 100 mL of distilled water and mixed therein under 300 rpm for 5 minutes, and then the active material was filtered off. While the filtrate was titrated with 0.1 M HCl solution, pH and the concentration of LiOH and that of Li₂CO₃ eluted from each active material were calculated. When excessive LiOH is dissolved in a solvent (NMP) during the fabrication of an electrode, the solvent is alkalinized. The alkalinized solvent is mixed with the binder to cause gelation of slurry, which makes it impossible to fabricate an electrode. In addition, excessive Li₂CO₃ is attacked easily and decomposed by HF generated from an excessively small amount of water molecules present in an electrolyte to cause gas generation. Therefore, it is required to remove lithium compounds, such as Li₂CO₃, providing residual lithium.

**[Table 7]**

| Sample | Li₂CO₃ | LiOH | Total |
|---|---|---|---|
| | (wt. %) | (wt. %) | (wt. %) |
| Comp. Ex. 13 | 0.115 | 0.401 | 0.516 |
| Example 11 | 0.14 | 0.32 | 0.46 |
| Example 12 | 0.187 | 0.301 | 0.489 |
| Comp. Ex. 16 | 0.278 | 0.545 | 0.823 |

When lithium remaining on the surface is not removed according to Comparative Example 16, the total content of residual lithium is 0.823 wt% of Li. On the contrary, it can be seen that when lithium remaining on the surface is removed according to Examples 11 and 12 of the present disclosure, residual lithium is controlled to a level similar to Comparative Example 13.

As can be seen from the foregoing, it is possible to recover and reuse a positive electrode active material from a stack cell by using a simple, eco-friendly and cost-efficient process according to the present disclosure. When a lithium secondary battery is manufactured by using the recycled positive electrode active material, there is no problem with battery performance.

## Claims

1. A method for reusing a positive electrode active material, comprising the steps of:
dipping (S10) a stack cell comprising a stacked and integrated positive electrode plate, separator and negative electrode plate, in a polar solvent to separate the positive electrode plate, wherein the separator includes a polymer substrate coated with ceramic particles, and the positive electrode plate comprises a current collector and a positive electrode active material layer comprising a binder and a conductive material;
heat treating (S30) the separated positive electrode plate in the air or under oxygen atmosphere at 300-650°C to perform thermal decomposition of the binder and conductive material in the positive electrode active material layer of the positive electrode plate and to separate the current collector of the positive electrode plate from the positive electrode active material layer, and recovering the active material in the active material layer;
washing (S40) the recovered active material with an aqueous lithium compound solution showing alkalinity in an aqueous solution state; and
adding a lithium precursor to the washed active material and carrying out annealing (S50) to obtain a reusable active material.

2. The method for reusing a positive electrode active material according to claim 1, wherein acetone is used as the polar solvent.

3. The method for reusing a positive electrode active material according to claim 1, which further comprises a step of carrying out surface coating (S160) of the annealed active material.

4. The method for reusing a positive electrode active material according to claim 1, which further comprises a step of carrying out surface coating (S160) of the annealed active material after washing the annealed active material.

5. The method for reusing a positive electrode active material according to claim 1, wherein the aqueous lithium compound solution is prepared in such a manner that it comprises a lithium compound in an amount of larger than 0% and equal to or less than 15%,

6. The method for reusing a positive electrode active material according to claim 1, wherein the washing (S40) is carried out by impregnating the recovered active material with the aqueous lithium compound solution, while carrying out agitation at the same time.

7. The method for reusing a positive electrode active material according to claim 1, wherein the lithium precursor used for the annealing is at least one selected from LiOH, Li₂CO₃, LiNO₃ and Li₂O.

8. The method for reusing a positive electrode active material according to claim 1, wherein the lithium precursor is added in such an amount that the ratio of lithium loss as compared to the ratio of lithium to the other metals in the original active material used for the active material layer may be supplemented, wherein the lithium precursor is added in an amount of lithium corresponding to a molar ratio of 0.001-0.4, when the ratio of lithium to the other metals in the original active material is 1.

9. The method for reusing a positive electrode active material according to claim 8, wherein the lithium precursor is added in such a manner that lithium is further added at a molar ratio of 0.0001-0.1 based on a molar ratio of 1 : 1 of lithium : the other metals.

10. The method for reusing a positive electrode active material according to claim 1, wherein the annealing (S50) is carried out at 400-1000°C under air or oxygen atmosphere.

11. The method for reusing a positive electrode active material according to claim 1, wherein the temperature of the annealing step (S50) is a temperature higher than the melting point of the lithium precursor.

12. The method for reusing a positive electrode active material according to claim 3 or 4, wherein the surface coating step (S160) is carried out by coating the surface of the active material with at least one of metals, organometals and carbonaceous ingredients through a solid phase process or liquid phase process, and then carrying out heat treatment at 100-1200°C.

13. The method for reusing a positive electrode active material according to claim 1, which further comprises a step of mixing the washed active material with a lithium precursor solution and carrying out spray drying, after the step of washing the recovered active material.

## Patentansprüche

1. Verfahren zur Wiederverwendung eines Positivelektrodenaktivmaterials, umfassend die folgenden Schritte:
Eintauchen (S10) einer Stapelzelle, umfassend eine gestapelte und integrierte Positivelektrodenplatte, Separator und Negativelektrodenplatte, in ein polares Lösungsmittel, um die Positivelektrodenplatte zu trennen, wobei der Separator ein mit Keramikteilchen beschichtetes Polymersubstrat umfasst und die Positivelektrodenplatte einen Stromkollektor und eine Positivelektrodenaktivmaterialschicht umfasst, umfassend ein Bindemittel und ein leitfähiges Material;
Wärmebehandeln (S30) der getrennten Positivelektrodenplatte an Luft oder unter Sauerstoffatmosphäre bei 300-650 °C, um eine thermische Zersetzung des Bindemittels und leitfähigen Materials in der Positivelektrodenaktivmaterialschicht der Positivelektrodenplatte durchzuführen und den Stromkollektor der Positivelektrodenplatte von der Positivelektrodenaktivmaterialschicht zu trennen, und Rückgewinnung des Aktivmaterials in der Aktivmaterialschicht;
Waschen (S40) des zurückgewonnenen Aktivmaterials mit einer wässrigen Lithiumverbindungslösung, die in einem wässrigen Lösungszustand Alkalität aufweist; und
Hinzufügen eines Lithiumvorläufers zu dem gewaschenen Aktivmaterial und Durchführen von Tempern (S50), um ein wiederverwendbares Aktivmaterial zu erhalten.

2. Verfahren zur Wiederverwendung eines Positivelektrodenaktivmaterials gemäß Anspruch 1, wobei Aceton als polares Lösungsmittel verwendet wird.

3. Verfahren zur Wiederverwendung eines Positivelektrodenaktivmaterials gemäß Anspruch 1, das ferner einen Schritt (S160) umfasst, bei dem eine Oberflächenbeschichtung des getemperten Aktivmaterials durchgeführt wird.

4. Verfahren zur Wiederverwendung eines Positivelektrodenaktivmaterials gemäß Anspruch 1, das ferner einen Schritt (S160) umfasst, bei dem eine Oberflächenbeschichtung des getemperten Aktivmaterials nach dem Waschen des getemperten Aktivmaterials durchgeführt wird.

5. Verfahren zur Wiederverwendung eines Positivelektrodenaktivmaterials gemäß Anspruch 1, wobei die wässrige Lithiumverbindungslösung so hergestellt wird, dass sie eine Lithiumverbindung in einer Menge von mehr als 0 % und gleich oder weniger als 15 % umfasst.

6. Verfahren zur Wiederverwendung eines Positivelektrodenaktivmaterials gemäß Anspruch 1, wobei das Waschen (S40) durchgeführt wird, indem das zurückgewonnene Aktivmaterial mit der wässrigen Lithiumverbindungslösung imprägniert wird, während gleichzeitig gerührt wird.

7. Verfahren zur Wiederverwendung eines Positivelektrodenaktivmaterials gemäß Anspruch 1, wobei der für das Tempern verwendete Lithiumvorläufer mindestens einer ist, der ausgewählt ist aus LiOH, Li₂CO₃, LiNO₃ und Li₂O.

8. Verfahren zur Wiederverwendung eines Positivelektrodenaktivmaterials gemäß Anspruch 1, wobei der Lithiumvorläufer in einer solchen Menge zugegeben wird, dass das Verhältnis des Lithiumverlusts im Vergleich zum Verhältnis von Lithium zu den anderen Metallen in dem ursprünglichen Aktivmaterial, das für die Aktivmaterialschicht verwendet wird, ergänzt werden kann, wobei der Lithiumvorläufer in einer Lithiummenge zugegeben wird, die einem Molverhältnis von 0,001-0,4 entspricht, wenn das Verhältnis von Lithium zu den anderen Metallen im ursprünglichen Aktivmaterial 1 beträgt.

9. Verfahren zur Wiederverwendung eines Positivelektrodenaktivmaterials gemäß Anspruch 8, wobei der Lithiumvorläufer so zugegeben wird, dass Lithium in einem Molverhältnis von 0,0001-0,1 weiter zugegeben wird, basierend auf einem Molverhältnis von 1 : 1 von Lithium : den anderen Metallen.

10. Verfahren zur Wiederverwendung eines Positivelektrodenaktivmaterials gemäß Anspruch 1, wobei das Tempern (S50) bei 400-1000 °C unter Luft- oder Sauerstoffatmosphäre durchgeführt wird.

11. Verfahren zur Wiederverwendung eines Positivelektrodenaktivmaterials gemäß Anspruch 1, wobei die Temperatur des Temperschritts (S50) eine Temperatur ist, die höher ist als der Schmelzpunkt des Lithiumvorläufers.

12. Verfahren zur Wiederverwendung eines Positivelektrodenaktivmaterials gemäß Anspruch 3 oder 4, wobei der Oberflächenbeschichtungsschritt (S160) durchgeführt wird, indem die Oberfläche des Aktivmaterials mit mindestens einem aus Metallen, Organometallen und kohlenstoffhaltigen Bestandteilen durch einen Festphasenprozess oder einen Flüssigphasenprozess beschichtet wird und anschließend eine Wärmebehandlung bei 100-1200 °C durchgeführt wird.

13. Verfahren zur Wiederverwendung eines Positivelektrodenaktivmaterials gemäß Anspruch 1, das ferner einen Schritt umfasst, bei dem das gewaschene Aktivmaterial mit einer Lithiumvorläuferlösung gemischt und Sprühtrocknung ausgeführt wird nach dem Schritt, bei dem das zurückgewonnene Aktivmaterial gewaschen wird.

## Revendications

1. Procédé de réutilisation d'un matériau actif d'électrode positive, comprenant les étapes suivantes :
le trempage (S10) d'une cellule empilée comprenant une plaque d'électrode positive empilée et intégrée, un séparateur et une plaque d'électrode négative, dans un solvant polaire afin de séparer la plaque d'électrode positive, dans lequel le séparateur inclut un subtrat polymère revêtu de particules céramiques, et la plaque d'électrode positive comprend un collecteur de courant et une couche de matériau actif d'électrode positive comprenant un liant et un matériau conducteur ;
le traitement thermique (S30) de la plaque d'électrode positive dans l'air ou sous atmosphère d'oxygène à 300-650 °C pour effectuer une décomposition thermique du liant et du matériau conducteur dans la couche de matériau actif d'électrode positive de la plaque d'électrode positive afin de séparer le collecteur de courant de la plaque d'électrode positive de la couche de matériau actif d'électrode positive, et recouvrir le matériau actif dans la couche de matériau actif ;
le lavage (S40) du matériau actif recouvert avec une solution de composé de lithium aqueux montrant une alcalinité dans un état de solution aqueuse ; et
l'ajout d'un précurseur de lithium au matériau actif lavé et le fait d'effectuer un recuit (S50) pour obtenir un matériau actif réutilisable.

2. Procédé de réutilisation d'un matériau actif d'électrode positive selon la revendication 1, dans lequel de l'acétone est utilisée en tant que solvant polaire.

3. Procédé de réutilisation d'un matériau actif d'électrode positive selon la revendication 1, qui comprend en outre une étape consistant à effectuer un revêtement de surface (S160) du matériau actif recuit.

4. Procédé de réutilisation d'un matériau actif d'électrode positive selon la revendication 1, qui comprend en outre une étape consistant à effectuer un revêtement de surface (S160) du matériau actif recuit après lavage du matériau actif recuit.

5. Procédé de réutilisation d'un matériau actif d'électrode positive selon la revendication 1, dans lequel la solution de composé de lithium aqueux est préparée d'une manière telle qu'elle comprend un composé de lithium dans une quantité supérieure à 0 % et inférieure ou égale à 15 %.

6. Procédé de réutilisation d'un matériau actif d'électrode positive selon la revendication 1, dans lequel le lavage (S40) est effectué en imprégnant le matériau actif recouvert avec la solution de composé de lithium aqueux, tout en effectuant une agitation en même temps.

7. Procédé de réutilisation d'un matériau actif d'électrode positive selon la revendication 1, dans lequel le précurseur de lithium utilisé pour le recuit est au moins un précurseur sélectionné parmi LiOH, Li₂CO₃, LiNO₃ et Li₂O.

8. Procédé de réutilisation d'un matériau actif d'électrode positive selon la revendication 1, dans lequel le précurseur de lithium est ajouté en une quantité telle que le rapport de perte de lithium tel que comparé au rapport de lithium sur les autres métaux dans le matériau actif originel utilisé pour la couche de matériau actif peut être complété, dans lequel le précurseur de lithium est ajouté en une quantité de lithium correspondant à un rapport molaire de 0,001-0,4, lorsque le rapport de lithium sur les autres métaux dans le matériau actif originel est de 1.

9. Procédé de réutilisation d'un matériau actif d'électrode positive selon la revendication 8, dans lequel le précurseur de lithium est ajouté de manière telle que du lithium est en outre ajouté à un rapport molaire de 0,0001-0,1 sur la base d'un rapport molaire de 1:1 de lithium : les autres métaux.

10. Procédé de réutilisation d'un matériau actif d'électrode positive selon la revendication 1, dans lequel le recuit (S50) est effectué à 400-1000 °C sous atmosphère d'air ou d'oxygène.

11. Procédé de réutilisation d'un matériau actif d'électrode positive selon la revendication 1, dans lequel la température de l'étape de recuit (S50) est une température supérieure au point de fusion du précurseur de lithium.

12. Procédé de réutilisation d'un matériau actif d'électrode positive selon la revendication 3 ou la revendication 4, dans lequel l'étape de revêtement de surface (S160) est effectuée en revêtant la surface du matériau actif avec au moins un élément parmi des métaux, des organométaux et des ingrédients carbonés à travers un processus en phase solide ou un processus en phase liquide, et effectuer ensuite un traitement thermique à 100-1200 °C.

13. Procédé de réutilisation d'un matériau actif d'électrode positive selon la revendication 1, qui comprend en outre une étape consistant à mélanger le matériau actif lavé avec une solution de précurseur de lithium et à effectuer un séchage par atomisation, après l'étape de lavage du matériau actif recouvert.
